(19) Europäisches Patentamt
European Patent Office
Office européen des brevets

(11) EP 2 228 418 A1

(12) EUROPEAN PATENT APPLICATION

(43) Date of publication:
15.09.2010 Bulletin 2010/37

(51) Int Cl.:
*C09J 7/02* (2006.01)

(21) Application number: 10156065.4

(22) Date of filing: 10.03.2010

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: 11.03.2009 JP 2009058703

(71) Applicant: **NITTO DENKO CORPORATION**
**Osaka (JP)**

(72) Inventors:
- **Niwa, Masahito**
  **Ibaraki-shi Osaka (JP)**
- **Okamoto, Masayuki**
  **Ibaraki-shi Osaka (JP)**
- **Higuchi, Naoaki**
  **Ibaraki-shi Osaka (JP)**

(74) Representative: **Grünecker, Kinkeldey, Stockmair & Schwanhäusser Anwaltssozietät**
**Leopoldstrasse 4**
**80802 München (DE)**

# (54) Acrylic pressure-sensitive adhesive sheet

(57) The present invention relates to an acrylic pressure-sensitive adhesive sheet including: a viscoelastic material layer (X) containing hollow microspheres; and a pressure-sensitive adhesive layer (Y) provided on at least one face of the viscoelastic material layer (X) and formed from a monomer composition, in which the monomer composition includes the following monomers (m1), (m2) and (m3) as essential monomer components, in which a content of the monomer (m1) is 50 to 85% by weight, a content of the monomer (m2) is 0.1 to 20% by weight, and a content of the monomer (m3) is 2 to 40% by weight, based on a total amount of monomer components constituting the monomer composition, (m1) an alkyl(meth)acrylate monomer including an alkyl group having 1 to 20 carbon atoms, which is represented by the following formula (1),

[Chem. 1]

$$CH_2{=}C(R^1)COOR^2 \qquad (1)$$

in which $R^1$ represents a hydrogen atom or a methyl group, and $R^2$ represents an alkyl group having 1 to 20 carbon atoms, (m2) an N-hydroxyalkyl(meth)acrylamide monomer having a hydroxyalkyl group having 1 to 4 carbon atoms, which is represented by the following formula (2),

[Chem. 2]

$$CH_2{=}C(R^3)CONHR^4 \qquad (2)$$

in which $R^3$ represents a hydrogen atom or a methyl group, and $R^4$ represents a hydroxyalkyl group having I to 4 carbon atoms,
(m3) a vinyl monomer having a nitrogen atom in a backbone thereof, except for the monomer (m2).

EP 2 228 418 A1

## Description

### FIELD OF THE INVENTION

The present invention relates to an acrylic pressure-sensitive adhesive sheet capable of exhibiting a good adhesiveness to low polarity adherends, and good properties in both repelling resistance and holding property.

### BACKGROUND OF THE INVENTION

Pressure-sensitive adhesive sheets using foams as a base have recently been used in various applications such as automobiles, building materials, and household appliances. In pressure-sensitive adhesive sheets to be used in these applications, good adhesiveness has been demanded for various adherends such as automotive coatings or metal, plastic, and the like. Such pressure-sensitive adhesive sheets typically include those provided with a pressure-sensitive adhesive layer formed by using a pressure-sensitive adhesive composition (acrylic pressure-sensitive adhesive composition) containing an acrylic copolymer as a base polymer. Further, these acrylic copolymers generally contain alkyl(meth)acrylate as a main body (a main component), and further copolymers which have copolymerizable compositions containing a functional group, particularly a carboxyl group-containing monomer are used for the purpose of improving adhesiveness.

For automotive use, as a measure of acid-rain on the surface of coatings, automotive acrylic coatings containing no or a reduced amount of melamine resin and having low polarity have been developed recently, further, products using low polarity plastic have been developed in building materials or house appliances.

With reference to automotive coatings or plastics having low polarity as described above, when the general acrylic pressure-sensitive adhesive is used, there is a problem that the adhesiveness or repelling resistance is poor and reliability is deteriorated.

As a pressure-sensitive adhesive sheet developing excellent pressure-sensitive adhesive force with reference to the acid-rain resistant automotive coatings, a pressure-sensitive adhesive sheet which has a pressure-sensitive adhesive layer containing a copolymer of acrylic ester monomers, carboxyl group-containing monomers and polymerizable acid anhydrides was proposed (See JP-A-2005-200513). However, it cannot be said that the pressure-sensitive adhesive sheet has sufficient adhesiveness.

A pressure-sensitive adhesive which adheres strongly to automotive paints has been described (See US Patent No.4,364,972 and JP-T-58-500130). This adhesive essencially includes a reaction product made by photopolymerizing acrylic acid ester with non-tertiary alcohol (of which the alkyl groups have an average of 4 to 14 carbon atoms), and N-vinyl-2-pyrrolidone in an amount within 15 to 50 parts by weight of the total monomers. According to the above-mentioned patent document, it is described that when modification copolymerizable monomers, for example, acrylic acid, acrylonitrile, and N-substituted acrylic amide are introduced to the pressure-sensitive adhesive composition, the "rapid pressure-sensitive adhesiveness" or "pressure-sensitive adhesiveness" of an adhesive has been damaged.

Further, foam tapes containing pressure sensitive adhesives having adhesiveness improved with reference to the acid-rain resistant automotive coatings are described (JP-A-2000-096012). However, there has been a problem that these pressure-sensitive adhesives including monomers containing acrylamide backbones exhibited a strong adhesiveness with reference to low polarity automotive coatings, but had no repelling resistance.

In pressure-sensitive adhesive compositions having compositions similar to US Patent No.4,364,972, JP-T-58-500130 and JP-A-2000-096012, there has been a problem that, when a certain stress was applied over a long period, it was difficult for a pressure-sensitive adhesive sheet to have good balance of durability against peeling (repelling resistance and holding property).

### SUMMARY OF THE INVENTION

Accordingly an object of the present invention is to provide a pressure-sensitive adhesive sheet capable of exhibiting good pressure-sensitive adhesiveness, particularly adhesiveness, and good properties in both repelling resistance and holding property, particularly to provide a pressure-sensitive adhesive sheet capable of exhibiting an excellent pressure-sensitive adhesiveness, particularly adhesiveness, and good properties in both repelling resistance and holding property to low polarity adherends such as automotive coatings having low polarity and plastics having low polarity.

As a result of intensive investigations to achieve the objects, the present inventors have found that an acrylic pressure-sensitive adhesive sheet, which includes a pressure-sensitive adhesive layer having, as a main component, an acrylic copolymer formed from a specific monomer composition on at least one face of a viscoelastic material layer containing hollow microspheres, exhibits good pressure-sensitive adhesiveness and adhesiveness, and good properties in both repelling resistance and holding property. The present invention has been made based on these findings.

Namely, the present invention relates to the following items 1 to 5.

1. An acrylic pressure-sensitive adhesive sheet including:

a viscoelastic material layer (X) containing hollow microspheres; and
a pressure-sensitive adhesive layer (Y) provided on at least one face of the viscoelastic material layer (X) and formed from a monomer composition,

in which the monomer composition includes the following monomers (m1), (m2) and (m3) as essential monomer components, in which a content of the monomer (m1) is 50 to 85% by weight, a content of the monomer (m2) is 0.1 to 20% by weight, and a content of the monomer (m3) is 2 to 40% by weight, based on a total amount of monomer components constituting the monomer composition,

(m1) an alkyl(meth)acrylate monomer including an alkyl group having 1 to 20 carbon atoms, which is represented by the following formula (1),

[Chem. 1]

$$CH_2{=}C(R^1)COOR^2 \qquad (1)$$

in which $R^1$ represents a hydrogen atom or a methyl group, and $R^2$ represents an alkyl group having 1 to 20 carbon atoms,
(m2) an N-hydroxyalkyl(meth)acrylamide monomer having a hydroxyalkyl group having 1 to 4 carbon atoms, which is represented by the following formula (2),

[Chem. 2]

$$CH_2{=}C(R^3)CONHR^4 \qquad (2)$$

in which $R^3$ represents a hydrogen atom or a methyl group, and $R^4$ represents a hydroxyalkyl group having 1 to 4 carbon atoms,
(m3) a vinyl monomer having a nitrogen atom in a backbone thereof, except for the monomer (m2).

2. The acrylic pressure-sensitive adhesive sheet according to item 1, in which the monomer (m3) vinyl monomer having a nitrogen atom in a backbone thereof is at least one kind of monomer selected from N-vinyl cyclic amides represented by the following formula (3) and (meth)acrylamides:

[Chem. 3]

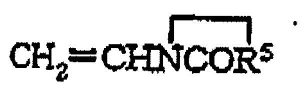

(3)

in which $R^5$ represents a divalent organic group.
3. The acrylic pressure-sensitive adhesive sheet according to item 1 or 2, in which a total content of the monomers (m1), (m2), and (m3) in the monomer composition is 80% by weight or more based on the total amount of the monomer components constituting the monomer composition.
4. The acrylic pressure-sensitive adhesive sheet according to any one of items 1 to 3, in which an acrylic copolymer obtained by polymerizing the monomer components constituting the monomer composition has a glass transition temperature (Tg) of -10°C or less.
5. A method for producing an acrylic pressure-sensitive adhesive sheet, the method including forming the acrylic pressure-sensitive adhesive sheet having a pressure-sensitive adhesive layer (Y) on at least one face of a viscoelastic

material layer (X) containing hollow microspheres, through steps of:

(i) preparing an acrylic pressure-sensitive adhesive composition including: a monomer composition or a partially polymerized composition thereof, including the following monomers (m1), (m2) and (m3) as essential monomer components, in which a content of the monomer (m1) is 50 to 85% by weight, a content of the monomer (m2) is 0.1 to 20% by weight, and a content of the monomer (m3) is 2 to 40% by weight, based on a total amount of monomer components constituting the monomer composition; and 0.01 to 2 parts by weight of a photopolymerization initiator based on 100 parts by weight of the monomer components;
(ii) applying the acrylic pressure-sensitive adhesive composition prepared in the step (i) on a support; and
(iii) curing the acrylic pressure-sensitive adhesive composition by irradiating an active energy ray to the acrylic pressure-sensitive adhesive composition applied on the support, thereby forming the pressure-sensitive adhesive layer (Y),

(m1) an alkyl(meth)acrylate monomer including an alkyl group having 1 to 20 carbon atoms, which is represented by the following formula (1),

[Chem. 4]

$$CH_2=C(R^1)COOR^2 \quad (1)$$

in which $R^1$ represents a hydrogen atom or a methyl group, and $R^2$ represents an alkyl group having 1 to 20 carbon atoms,
(m2) an N-hydroxyalkyl(meth)acrylamide monomer having a hydroxyalkyl group having 1 to 4 carbon atoms, which is represented by the following formula (2),

[Chem. 5]

$$CH_2=C(R^3)CONHR^4 \quad (2)$$

in which $R^3$ represents a hydrogen atom or a methyl group, and $R^4$ represents a hydroxyalkyl group having 1 to 4 carbon atoms,
(m3) a vinyl monomer having a nitrogen atom in a backbone thereof, except for the monomer (m2).

According to the acrylic pressure-sensitive adhesive sheet of the invention, since the sheet has the above construction, it is possible to obtain the sheet having good pressure-sensitive adhesiveness, particularly adhesiveness, and good properties in both repelling resistance and holding property. Particularly, it is possible to obtain the sheet having a good pressure-sensitive adhesiveness, particularly adhesiveness, and good properties in both repelling resistance and holding property to low polarity adherends such as automotive coatings having low polarity and plastics having low polarity.

## DETAILED DESCRIPTION OF THE INVENTION

The acrylic pressure-sensitive adhesive sheet of the invention includes a viscoelastic material layer (X) containing hollow microspheres; and a pressure-sensitive adhesive layer (Y) provided on at least one face of the viscoelastic material layer (X) and formed from a monomer composition, in which the monomer composition includes the following monomers (m1), (m2) and (m3) as essential monomer components, in which a content of the monomer (m1) is 50 to 85% by weight, a content of the monomer (m2) is 0.1 to 20% by weight, and a content of the monomer (m3) is 2 to 40% by weight, based on a total amount of monomer components constituting the monomer composition,

(m1) an alkyl(meth)acrylate monomer including an alkyl group having 1 to 20 carbon atoms, which is represented by the following formula (1),

[Chem. 6]

$$CH_2=C(R^1)COOR^2 \quad (1)$$

in which $R^1$ represents a hydrogen atom or a methyl group, and $R^2$ represents an alkyl group having 1 to 20 carbon atoms,
(m2) an N-hydroxyalkyl(meth)acrylamide monomer having a hydroxyalkyl group having 1 to 4 carbon atoms, which is represented by the following formula (2),

[Chem. 7]

$$CH_2=C(R^3)CONHR^4 \quad (2)$$

in which $R^3$ represents a hydrogen atom or a methyl group, and $R^4$ represents a hydroxyalkyl group having 1 to 4 carbon atoms,
(m3) a vinyl monomer having a nitrogen atom in a backbone thereof, except for the monomer (m2).

Further, in the present application, there may be a case where "tape or sheet" is simply referred to as "tape" or "sheet".

The acrylic pressure-sensitive adhesive sheet of the invention is not particularly limited so far as it is a type where at least one pressure-sensitive adhesive face is provided by the pressure-sensitive adhesive layer (Y). It may be a double-coated pressure-sensitive adhesive sheet type of which both faces are pressure-sensitive adhesive faces, or a single-coated pressure-sensitive adhesive sheet type, of which one face only is a pressure-sensitive adhesive face.

When the acrylic pressure-sensitive adhesive sheet of the invention is a double-coated pressure-sensitive adhesive sheet type, for example, a type where a pressure-sensitive adhesive face is provided by the pressure-sensitive adhesive layer (Y) where the pressure-sensitive adhesive face is formed on both faces of the viscoelastic material layer (X); a type where a pressure-sensitive adhesive face is provided by the viscoelastic material layer (X) and the pressure-sensitive adhesive layer (Y) such that the viscoelastic material layer (X) has the pressure-sensitive adhesive force which is required as a pressure-sensitive adhesive layer; a type where a pressure-sensitive adhesive face is provided by the pressure-sensitive adhesive layer (Y) and a pressure-sensitive adhesive layer other than the pressure-sensitive adhesive layer (Y) such that the pressure-sensitive adhesive layer (Y) is formed on one face of the viscoelastic material layer (X), and a pressure-sensitive adhesive layer (for example, known and typical pressure-sensitive adhesive layers) other than the pressure-sensitive adhesive layer (Y) is formed on the other face of the viscoelastic material layer (X), and the like may be mentioned.

When the acrylic pressure-sensitive adhesive sheet of the invention is a single-coated pressure-sensitive adhesive sheet type, a pressure-sensitive adhesive face is provided by the pressure-sensitive adhesive layer (Y) only. For example, a type where the pressure-sensitive adhesive layer (Y) is formed on one face of the viscoelastic material layer (X) having no pressure-sensitive adhesive force such that the viscoelastic material layer (X) having no pressure-sensitive adhesive force is made to be a sheet as a support; a type where the pressure-sensitive adhesive layer (Y) is formed on one face of the viscoelastic material layer (X), such that the viscoelastic material layer (X) has the pressure-sensitive adhesive force which is required as a pressure-sensitive adhesive layer, and a base is formed on the other face, and the like may be mentioned.

Further, the acrylic pressure-sensitive adhesive sheet of the invention may be formed as a type where the sheet is wound in the form of a roll, or a type where the sheet is laminated. That is, the acrylic pressure-sensitive adhesive sheet of the invention can have forms such as a sheet and a tape.

Viscoelastic Material Layer (X)

In the invention, the viscoelastic material layer (X) containing hollow microspheres contains at least hollow microspheres and a base polymer constituting a viscoelastic material. In the invention, the viscoelastic material layer (X) exhibits good thickness unevenness absorbability and good stress dispersibility. Accordingly, since the acrylic pressure-sensitive adhesive sheet of the invention may disperse stress in the viscoelastic material layer (X), excellent repelling resistance and adhesiveness may be exhibited and good adhesiveness to curved surfaces or uneven surfaces may be exhibited.

As the composition for forming the viscoelastic material layer (X) (there may be a case where this composition is referred to as "viscoelastic material composition"), a composition where the hollow microspheres are blended with a base polymer constituting a viscoelastic material, and a composition where the hollow microspheres are blended with a monomer mixture to form a base polymer constituting a viscoelastic material or the partially polymerized product thereof (there may be a case where this composition is referred to as a "hollow microsphere-containing monomer mixture or the partially polymerized product thereof") may be mentioned. Further, this means that the partially polymerized product is not a completely polymerized composition. For example, a composition in a syrup state, and the like which is obtained by polymerizing a part of the monomer component, and has a conversion of approximately 10% by weight is exemplified.

The usable base polymer is not particularly limited and can be suitably selected from known base polymers. Examples of the base polymers include acrylic polymers, rubber polymers, vinyl alkyl ether polymers, silicone polymers, polyester polymers, polyamide polymers, urethane polymers, fluorine polymers and epoxy polymers. Of these base polymers, the acrylic polymers are particularly preferably used from the viewpoint of good adhesiveness to the pressure-sensitive adhesive layer (Y). That is, in the invention, the viscoelastic material layer (X) is preferably an acrylic viscoelastic material layer. Further, an acrylic viscoelastic material layer is also preferred due to the high degree of freedom for designing wide-ranging properties such as tackiness, elasticity, and low and high temperature adhesiveness.

Further, since the known base polymer may be also used as a base polymer of the known pressure-sensitive adhesives, there may be a case where the surface of the viscoelastic material layer (X) exhibits the pressure-sensitive adhesiveness.

The acrylic polymer is a polymer of alkyl(meth)acrylates as main monomer components. Examples of these alkyl(meth)acrylates include alkyl(meth)acrylate monomers having a linear chain or branched chain alkyl group. Examples of these alkyl(meth)acrylate monomers include alkyl(meth)acrylates which have an alkyl group having 1 to 20 carbon atoms, such as methyl(meth)acrylates, ethyl(meth)acrylates, n-propyl(meth)acrylates, isopropyl(meth)acrylates, n-butyl(meth)acrylates, isobutyl(meth)acrylates, sec-butyl(meth)acrylates, t-butyl(meth)acrylates, pentyl(meth)acrylates, isopentyl(meth)acrylates, hexyl(meth)acrylates, heptyl(meth)acrylates, n-octyl(meth)acrylates, isooctyl(meth)acrylates, 2-ethylhexyl(meth)acrylates, nonyl(meth)acrylates, isononyl(meth)acrylates, decyl(meth)acrylates, isodecyl(meth)acrylates, undecyl(meth)acrylates, dodecyl(meth)acrylates, tridecyl(meth)acrylates, tetradecyl(meth)acrylates, pentadecyl(meth)acrylates, hexadecyl(meth)acrylates, heptadecyl(meth)acrylates, octadecyl(meth)acrylates, nonadecyl(meth)acrylates, and eicosyl(meth)acrylates. Among them, alkyl(meth)acrylates which have an alkyl group having 2 to 14 carbon atoms are preferred, and alkyl(meth)acrylates which have an alkyl group having 2 to 10 carbon atoms are more preferred. Further, these alkyl(meth)acrylates may be used alone or in combination of two or more kinds thereof.

Further, the alkyl(meth)acrylates include alkyl(meth)acrylate monomers having a cyclic alkyl group, such as cyclopentyl (meth)acrylates, cyclohexyl(meth)acrylates, and isobornyl (meth)acrylates.

Further, since the alkyl(meth)acrylates are the main monomer components of the acrylic polymer, it is important that the content thereof is 60% by weight or more, and preferably 80% by weight or more, based on the total amount of the monomer components constituting the acrylic polymer.

Further, a copolymerizable monomer may be used as a monomer component, in addition to main monomer components in the base polymer of the viscoelastic material layer (X). By using copolymerizable monomers as a monomer component, the natural stress dispersibility of foams can be controlled, and a strong adhesiveness can be easily designed. Further, copolymerizable monomers may be used alone or in combination of two or more kinds thereof.

For example, when the viscoelastic material layer (X) is an acrylic viscoelastic material layer, the acrylic polymer as the base polymer may contain, as a monomer component, copolymerizable monomers such as polar group-containing monomers and polyfunctional monomers.

Examples of the polar group-containing monomers include carboxyl group-containing monomers or the anhydrides thereof, hydroxyl group-containing monomers, sulfonic group-containing monomers, amide group-containing monomers, amino group-containing monomers, glycidyl group-containing monomers, cyano acrylate monomers, heterocycle-containing vinyl monomers, and the like. Examples of the carboxyl group-containing monomers or the anhydrides thereof include (meth)acrylic acid, carboxyethyl(meth)acrylates, carboxypentyl(meth)acrylates, itaconic acid, maleic acid, fumaric acid, crotonic acid, isocrotonic acid and maleic anhydride. Examples of the hydroxyl group-containing monomers include 2-hydroxyethyl(meth)acrylates, 3-hydroxypropyl(meth)acrylates, 4-hydroxybutyl (meth)acrylates, 6-hydroxyhexyl(meth)acrylates, 8-hydroxyoctyl(meth)acrylates, 10-hydroxydecyl (meth)acrylates, 12-hydroxylauryl(meth)acrylates and (4-hydroxymethylcyclohexyl)-methyl acrylate. Examples of the sulfonic group-containing monomers include 2-acrylamido-2-methylpropanesulfonic acid and sulfopropyl acrylate. Examples of the amide group-containing monomers include (meth)acrylamides, N,N-dimethyl(meth)acrylamides, N-methylol(meth)acrylamides, N-methoxymethyl(meth)acrylamides and N-butoxymethyl(meth)acrylamides. Examples of the amino group-containing monomers include aminoethyl(meth)acrylates, dimethylaminoethyl(meth)acrylates and t-butylaminoethyl (meth)acrylates. Examples of the glycidyl group-containing monomers include glycidyl(meth)acrylates and methylglycidyl(meth)acrylates. Examples of the cyano acrylate monomers include acrylonitrile and methacrylonitrile. Examples of the heterocycle-containing vinyl

monomers include N-vinyl-2-pyrrolidone, (meth)acryloylmorpholine, N-vinylpyridine, N-vinylpiperidone, N-vinylpyrimidine, N-vinylpiperazine, N-vinylpyrazine, N-vinylpyrrole, N-vinylimidazole and N-vinyloxazole.

In view of cohesive force, polar group-containing monomers are preferably carboxyl group-containing monomers or the anhydride thereof, and hydroxyl group-containing monomers, and acrylic acid and methacrylic acid are particularly preferable.

The amount of the polar group-containing monomers is preferably 30% by weight or less (for example, 1 to 30% by weight) based on the total amount of the monomer components constituting the acrylic polymer. Further preferred is 3 to 20% by weight. When the content of the polar group-containing monomers is more than 30% by weight, there is a concern that the flexibility of the viscoelastic material layer (X) is impaired, whereby the resulting pressure-sensitive adhesive sheet may deteriorate in adhesiveness to adherends, and the like having uneven surfaces. Further, when the content of the polar group-containing monomers is less than 1% by weight, there is a concern that the cohesive force of the viscoelastic material layer (X) is lowered, whereby the resulting pressure-sensitive adhesive sheet may deteriorate in holding performance as a pressure-sensitive adhesive sheet, or may deteriorate in processability upon working such as cutting or punching of the sheet.

The polyfunctional monomers are not particularly limited, so far as the monomers are a compound having two or more (meth)acryloyl groups. Examples of the polyfunctional monomers include trimethylolpropane tri(meth)acrylates, tetramethylolmethane tetraacrylates, pentaerythritol di(meth)acrylates, pentaerythritol tri(meth)acrylates, pentaerythritol tetra(meth)acrylates, 1,2-ethylene glycol di(meth)acrylates, 1,4-buthylene glycol di(meth)acrylates, 1,6-hexanediol di (meth)acrylates, 1,12-dodecanediol di(meth)acrylates, dipentaerythritol monohydroxy penta(meth)acrylates, dipentaerythritol hexa(meth)acrylates, polyethylene glycol di(meth)acrylates, hexanediol di(meth)acrylates, (poly)ethylene glycol di(meth)acrylates, (poly)propylene glycol di(meth)acrylates, neopentyl glycol di(meth)acrylates, tetramethylol methane tri(meth)acrylates, allyl(meth)acrylates, vinyl(meth)acrylates, epoxy acrylates, polyester acrylates, urethane acrylates and reactive hyperbranched polymers (for example, trade name: "CN2300", "CN2301", "CN2320", and the like, made by SARTOMER corporation) having a plurality of (meth)acryloyl groups at the terminal.

The content of the polyfunctional monomers is not particularly limited, and is preferably 2% by weight or less (for example, 0.01 to 2% by weight), and is further preferably 1% by weight or less (0.02 to 1 % by weight), based on the total amount of the monomer components constituting the acrylic polymer. When the content of the polyfunctional monomers is more than 2% by weight, there is a concern that the flexibility of the viscoelastic material layer (X) is impaired, whereby the resulting pressure-sensitive adhesive sheet may deteriorate in adhesiveness to adherends having uneven surfaces. Further, when the content of the polyfunctional monomers is less than 0.01% by weight, there is a concern that the cohesive force of the viscoelastic material layer (X) becomes insufficient, and therefore the resulting pressure-sensitive adhesive sheet may deteriorate in holding performance as a pressure-sensitive adhesive sheet, or may deteriorate in processability upon working such as cutting or punching of the sheet.

Examples of the copolymerizable monomers, other than the polar group-containing monomers and the polyfunctional monomers, include vinyl esters, aromatic vinyl compounds, olefins or dienes, vinyl ethers, alkoxyalkyl(meth) acrylate monomers, vinyl chlorides, sulfonic group-containing monomers, phosphate group-containing monomers, imide group-containing monomers, fluorine-containing (meth)acrylates and silicon-containing (meth)acrylates. Examples of the vinyl esters include vinyl acetate and vinyl propionate. Examples of the aromatic vinyl compounds include styrene and vinyltoluene. Examples of the olefins or the dienes include ethylene, butadiene, isoprene and isobutylene. Examples of the vinyl ethers include vinyl alkyl ethers. Examples of the alkoxyalkyl(meth)acrylate monomers include methoxyethyl (meth)acrylates and ethoxyethyl (meth)acrylates. Examples of the sulfonic group-containing monomers include sodium vinylsulfonate. Examples of the phosphate-containing monomers include 2-hydroxyethylacryloyl phosphate. Examples of the imide group-containing monomers include cyclohexylmaleimide and isopropylmaleimide.

In the invention, the base polymer (particularly an acrylic polymer) of the viscoelastic material layer (X) is obtained by copolymerizing the monomer components. The usable polymerization methods include known solution polymerization, emulsion polymerization and mass polymerization. In the invention, from the viewpoint of workability, less environmental load, and coating in the case of obtaining a thick viscoelastic material, the curing reaction by active energy rays using a photopolymerization initiator (photoinitiator) is preferably used. Further, polymerization initiators may be used alone or in combination of two or more kinds thereof.

Examples of the photopolymerization initiators are not particularly limited, and include ketal photopolymerization initiators, α-hydroxyketone photopolymerization initiators, α-aminoketone photopolymerization initiators, acylphosphine oxide photopolymerization initiators, benzoin ether photopolymerization initiators, acetophenone photopolymerization initiators, aromatic sulfonyl chloride photopolymerization initiators, photo-active oxime photopolymerization initiators, benzoin photopolymerization initiators, benzyl photopolymerization initiators, benzophenone photopolymerization initiators and thioxanthone photopolymerization initiators.

Examples of the ketal photopolymerization initiators include 2,2-dimethoxy-1,2-diphenylethan-1-one [for example, trade name "Irgacure 651", made by Ciba Japan K.K.)]. Examples of the α-hydroxyketone photopolymerization initiators include 1-hydroxycyclohexyl phenyl ketone ("Irgacure 184" made by Ciba Japan K.K.), 2-hydroxy-2-methyl-1-phenyl-propan-1-one ("Darocure 1173" made by Ciba Japan K.K.) and 1-[4-(2-hydroxyethoxy)-phenyl]-2-hydroxy-2-methyl-1-propan-1-one ("Irgacure 2959" made by Ciba Japan K.K.). Examples of the α-aminoketone photopolymerization initiators include 2-methyl-1-[4-(methylthio)phenyl]-2-morpholinopropan-1-one ("Irgacure 907" made by Ciba Japan K.K.) and 2-benzyl-2-dimethylamino-1-(4-morpholinophenyl)-butanon-1 ("Irgacure 369" made by Ciba Japan K.K.). Examples of the acylsulfone oxide photopolymerization initiators include 2,4,6-trimethylbenzoyldiphenylphosphine oxide ("Lucirin TPO" made by BASF corporation). Examples of the benzoin ether photopolymerization initiators include benzoin methyl ether, benzoin ethyl ether, benzoin propyl ether, benzoin isopropyl ether, benzoin isobutyl ether, 2,2-dimethoxy-1,2-diphenylethan-1-one and anisole methyl ether. Examples of the acetophenone photopolymerization initiators include 2,2-diethoxyacetophenone, 2,2-dimethoxy-2-phenylacetophenone, 1-hydroxycyclohexyl phenyl ketone, 4-phenoxydichloroacetophenone and 4-(t-butyl)-dichloroacetophenone. Examples of the aromatic sulfonyl chloride photopolymerization initiators include 2-naphthalenesulfonyl chloride. Examples of the photo-active oxime photopolymerization initiators include 1-phenyl-1,1-propanedione-2-(o-ethoxycarbonyl)-oxime. Examples of the benzoin photopolymerization initiators include benzoin. Examples of the benzyl photopolymerization initiators include benzil. Examples of the benzophenone photopolymerization initiators include benzophenone, benzoylbenzoic acid, 3,3'-dimethyl-4-methoxybenzophenone, polyvinylbenzophenone and α-hydroxycyclohexyl phenyl ketone. Examples of the thioxanthone photopolymerization initiators include thioxanthone, 2-chlorothioxanthone, 2-methylthioxanthone, 2,4-dimethylthioxanthone, isopropylthioxanthone, 2,4-diisopropylthioxanthone and dodecylthioxanthone.

The amount of the photopolymerization initiators used is not limited, and when acrylic polymers are used as a base polymer of the viscoelastic material layer (X), the amount thereof is preferably 0.001 to 0.5 parts by weight, and more preferably 0.01 to 0.1 parts by weight, based on 100 parts by weight of the total monomer components constituting the acrylic polymer.

It is important to irradiate an active energy ray to the microsphere-containing polymerizable composition in order to activate the photopolymerization initiators. Examples of the active energy rays include ionizing radiations such as α-rays, β-rays, γ-rays, neutron beams, and electron beams; and ultraviolet rays. In particular, the ultraviolet rays are preferably used. The irradiation dose and the irradiation time of an active energy ray, and the like are not particularly limited, as long as the photopolymerization initiators do not inhibit the reaction of monomer components.

Further, in the invention, when the base polymer (particularly an acrylic polymer) of the viscoelastic material layer (X) may be obtained by copolymerizing the monomer components, a curing reaction by thermal polymerization initiators may be used. Further, the curing reaction by thermal polymerization initiators may be used in combination with the curing reaction by the photopolymerization initiator described above. Examples of the thermal polymerization initiators include azo polymerization initiators [for example, 2,2'-azobis-2-methylbutyronitrile, dimethyl 2,2'-azobis(2-methylpropionate), 4,4'-azobis-4-cyanovaleric acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, 2,2'-azobis(N,N'-dimethyleneisobutylamidine) dihydrochloride, and the like]; and redox polymerization initiators. The amount of the thermal polymerization initiators used is not particularly limited, as long as it is within ranges usable as thermal polymerization initiators.

The viscoelastic material layer (X) includes hollow microspheres. Use of the hollow microspheres allows the viscoelastic material layer (X) to increase shear adhesive force, and further to increase processability. The hollow microspheres may be used alone or in combination of two or more kinds thereof.

The hollow microspheres may be hollow inorganic microspheres or hollow organic microspheres. Specifically, examples of the hollow inorganic microspheres in the hollow microspheres include hollow balloons made of glass, such as hollow glass balloons; hollow balloons made of metallic compounds, such as hollow alumina balloons; and hollow balloons made of a magnet, such as hollow ceramic balloons. Further, examples of the hollow organic microspheres include hollow balloons made from resins, such as hollow acrylic balloons and hollow vinylidene chloride balloons.

The particle diameter (average particle diameter) of the hollow microspheres is not particularly limited and can be selected within ranges of, for example, 1 to 500 μm, preferably 5 to 200 μm, and more preferably 10 to 100 μm.

The density of the hollow microspheres is not particularly limited and, for example, can be selected within ranges of, for example, 0.1 to 0.8 g/cm$^3$, and preferably 0.12 to 0.5 g/cm$^3$. When the density of the hollow microspheres is less than 0.1 g/cm$^3$, it is difficult to uniformly disperse the hollow microspheres in the polymerizable composition, because such microspheres tend to float, upon preparing the viscoelastic material composition [for example, when preparing a hollow microsphere-containing monomer mixture or a partially polymerized product in the case of allowing the hollow microspheres to be contained in the viscoelastic material layer (X) by blending the hollow microspheres with mixture (monomer mixture) of monomer components for forming the base polymer of the viscoelastic material layer (X)]. In contrast, when the density of the hollow microspheres is more than 0.8 g/cm$^3$, it may be expensive and may increase the production cost.

The content of the hollow microspheres is not particularly limited and is preferably 5 to 50% by volume, more preferably 10 to 50% by volume, and further preferably 15 to 40% by volume of the total volume of the viscoelastic material layer (X). When the content of the hollow microspheres is less than 5% by volume of the total volume of the

viscoelastic material layer (X), there may be a case where the advantages may not be exhibited due to the addition of the hollow microspheres. In contract, when the content is more than 50% by volume, there is a concern that since the occupation ratio of cell structure is too large in the viscoelastic material layer (X), the adhesiveness of the acrylic pressure-sensitive adhesive sheet of the invention may be lowered.

For handleability, the viscoelastic material composition preferably may have a viscosity adjusted to be suitable for application (generally, the viscosity of 0.3 to 40 Pa·s as measured at a temperature of 25° C according to the viscosity determination with a Brookfield type viscometer).

When the partially polymerized product of the hollow microspheres-containing monomer mixtures is used as the viscoelastic material composition, in view of obtaining the above-mentioned viscosity, although depending on the molecular weight of a partially polymerized moiety, conversion thereof is about 2 to 40% by weight, and preferably 5 to 20% by weight. The partial polymerization is generally conducted by irradiation with an active energy ray, particularly ultraviolet rays, while avoiding contact with oxygen.

The conversion of the partially polymerized product is determined in the following manner. About 0.5 g of the partially polymerized product is precisely weighed, dried at 130°C for 2 hours, the dried sample is precisely weighed, whereby a weight loss [a volatile component (weight of unreacted monomers)] is determined, and the determined weight loss is substituted in the following equation:

$$\text{Conversion (\% by weight) of the partially polymerized product} = [1-(\text{Weight loss})/(\text{Weight of the partially polymerized product before drying})]\times 100$$

The viscosity of the viscoelastic material composition may also be adjusted by adequately blending thickening polymers. Examples of the thickening polymers include acrylic polymers obtained by copolymerizing the alkyl(ineth) acrylate with acrylic acid, acrylamide, acrylonitrile, acryloylmorpholine, or the like; styrene-butadiene rubbers (SBRs); isoprene rubbers; styrene-butadiene block copolymers (SBSs); ethylene-vinyl acetate copolymers; acrylic rubbers; polyurethanes; and polyesters. Further, the thickening polymers may be used alone or in combination of two or more kinds thereof.

From the view point of improving cushioning property and adhesion, the viscoelastic material layer (X) may contain cells in addition to the hollow microspheres.

Cell structures to be contained in the viscoelastic material layer (X) are not particularly limited, and may be any one of closed cell structures, interconnected cell structures, and cell structures (semi-interconnected semi-closed cell structure) which mix the closed cell structures with the interconnected cell structures.

The method of containing cells in the viscoelastic material layer (X) is not particularly limited. Known or typical methods may be used. Cells may be contained by (1) a process of forming the viscoelastic material layer (X) with a viscoelastic material composition in which a gas component that forms cells (hereinafter there may be a case where this composition is referred to as a "cell-forming gas") is mixed; or by (2) a process of forming the viscoelastic material layer (X) using a viscoelastic material composition further containing a blowing agent. In the invention, the viscoelastic material layer (X) is typically made to contain cells by the process (1). Examples of the blowing agent are not particularly limited, and can be suitably selected from known blowing agents such as heat-expandable microspheres.

The amount of cells to be mixed in the viscoelastic material layer (X) is not particularly limited, and can be suitably selected depending on the purpose. The amount thereof may be, for example, 3 to 30% by volume, preferably 8 to 26% by volume, and more preferably 13 to 22% by volume, based on the total volume of the viscoelastic material layer (X). When the mixed amount is less than 3% by volume, their advantages due to the mixed cells may not be exhibited. In contrast, when the content is more than 30% by volume, there is a concern that it may result in cells penetrating through the viscoelastic material layer (X), and this may deteriorate viscoelasticity performance and appearance.

Further, such cells generally have spherical shapes (particularly, a true spherical shape), but they may have deformed spherical shapes. The average cell size (diameter) of cells is not particularly limited, and for example, can be selected within ranges of typically 1 to 1000 μm, preferably 10 to 500 μm, and further preferably 30 to 300 μm.

A cell component (a gas component forming cells; "cell-forming gas") contained in the cells is not particularly limited and various kinds of gaseous components can be used including inert gases such as nitrogen, carbon dioxide, or argon, or air. When a reaction such as polymerization is conducted after mixing a cell-forming gas into the composition, it is important that the cell-forming gas should be one not inhibiting the reaction. As the cell-forming gases, nitrogen is preferred from the viewpoints that it does not inhibit the reaction and is inexpensive, and the like.

Surfactants may be added to the viscoelastic material composition in order to stably mix fine cells. Examples of the surfactants include hydrocarbon surfactants, silicone surfactants and fluorine surfactants.

As the fluorine surfactants, fluorine surfactants having an oxy-($C_{2-3}$)alkylene group and a fluorinated hydrocarbon group per molecule are used. The oxy-($C_2$-$_3$)alkylene group is represented by the formula: -R-O- (wherein R represents a linear chain or branched chain alkylene group having 2 or 3 carbon atoms). The fluorine surfactants are not particularly limited, as long as each contains an oxy-($C_{2-3}$)alkylene group and a fluorinated hydrocarbon group per molecule. Nonionic surfactants are preferred, from the viewpoint of dispersibility in the base polymer. Further, the fluorine surfactants may each contain any one of an oxyethylene group ($-CH_2CH_2O-$) and an oxypropylene group [$-CH_2CH(CH_3)O-$] per molecule, or a combination of two or more kinds thereof.

Examples of the oxy-($C_2$-$_3$)alkylene group include an alcohol in which the terminal oxygen atom is bonded to a hydrogen atom; an ether in which the terminal oxygen atom is bonded to another hydrocarbon group; and an ester in which the terminal oxygen atom is bonded via a carbonyl group to another hydrocarbon group. The oxy-($C_{2-3}$)alkylene group may have any form. The oxy-($C_{2-3}$)alkylene group may also have part of a cyclic structure such as a cyclic ether or a lactone.

The fluorinated hydrocarbon group is not particularly limited, but is preferably a perfluoro group. The perfluoro group may be monovalent or multivalent (divalent or higher). The fluorinated hydrocarbon group may have a double bond or a triple bond and may have any of linear, branched, and cyclic structures. The number of carbon atoms of the fluorinated hydrocarbon group is not particularly limited and is 1 or 2 or more, preferably 3 to 30, and more preferably 4 to 20.

The structures of the fluorine surfactants are not particularly limited, and for example, copolymers containing, as a monomer component, a monomer having an oxy-($C_{2-3}$)alkylene group and a monomer having a fluorinated hydrocarbon group can be preferably used. These copolymers can use suitably any of block copolymers, graft copolymers, and the like.

Examples of the block copolymers (copolymers having an oxy-($C_{2-3}$) alkylene group and a fluorinated hydrocarbon group in principal chain) include polyoxyethylene perfluoroalkyl ethers, perfluoroalkylated polyoxyethylenes, polyoxypropylene perfluoroalkyl ethers, polyoxyisopropylene perfluoroalkyl ethers, perfluoroalkylated polyoxyethylene sorbitans, perfluoroalkylated polyoxyethylene polyoxypropylene block copolymers and perfluoroalkylated polyoxyethylene glycols.

As graft copolymers (copolymers having an oxy-($C_{2-3}$)alkylene group and a fluorinated hydrocarbon group in side chain), copolymers containing, as a monomer component, at least a vinyl compound having a polyoxyalkylene group and a vinyl compound having a fluorinated hydrocarbon group, particularly acrylic copolymers are preferably used.

Examples of the vinyl compounds having a polyoxyalkylene group include polyoxyalkylene (meth)acrylates such as polyoxyethylene (meth)acrylates, polyoxypropylene (meth)acrylates and polyoxyethylene polyoxypropylene (meth)acrylates.

Examples of the vinyl compounds having a fluorinated hydrocarbon group include (meth)acrylic acid esters containing a fluorinated hydrocarbon, including perfluoroalkyl(meth)acrylates such as perfluorobutyl (meth)acrylates, perfluoroisobutyl(meth)acrylates, perfluoropentyl(meth)acrylates, and the like.

The fluorine surfactants may further contain structures other than the above structure in molecule thereof, such as an alicyclic hydrocarbon group and an aromatic hydrocarbon group. They may also contain a variety of functional groups such as a carboxyl group, a sulfonic group, a cyano group, an amide group, and an amino group, within ranges not impeding dispersibility in the base polymer. For example, when a fluorine surfactant is a vinyl copolymer, the usable monomer components include monomer components copolymerizable with the vinyl compound having a polyoxyalkylene goup and the vinyl compound having a fluorinated hydrocarbon group. These monomers can be used alone or in combination of two or more kinds thereof.

Preferred copolymerizable monomer components, for example, include $C_{1-20}$ alkyl(meth)acrylates such as undecyl(meth)acrylates and dodecyl(meth)acrylates; (meth)acrylic acid esters having an alicyclic hydrocarbon group, such as cyclopentyl(meth)acrylates; and (meth)acrylic acid esters having an aromatic hydrocarbon group, such as phenyl (meth)acrylates. Examples of the copolymerizable monomer components further include carboxyl group-containing monomers such as maleic acid and crotonic acid; sulfonic group-containing monomers such as sodium vinylsulfonate; aromatic vinyl compounds such as styrene and vinyltoluene; olefins or dienes, such as ethylene and butadiene; vinyl ethers such as vinyl alkyl ethers; amide group-containing monomers such as acrylamide; amino group-containing monomers such as (meth)acryloylmorpholine; glycidyl group-containing monomers such as glycidyl methyl(meth)acrylates; isocyanate goup-containing monomers such as 2-methacryloyloxyethyl isocyanate. Examples of the usable copolymerizable monomers further include polyfunctional copolymerizable monomers (polyfunctional monomers) such as dipentaerythritol hexa(meth)acrylates and divinylbenzene.

The fluorine surfactant can have any molecular weight without particular limitations. However, the adhesion and frictional resistance between the base polymers in the viscoelastic material composition and the hollow microspheres are highly effectively reduced, when the fluorine surfactant is one having a weight-average molecular weight of less than 20000 (for example, 500 or more, but less than 20000). When such a fluorine surfactant having a weight-average molecular weight of less than 20000 is used in combination with another fluorine surfactant having a weight-average

molecular weight of 20000 or more (for example, 20000 to 100000, preferably 22000 to 80000, and more preferably 24000 to 60000), mixability of cells and stability of mixed cells are improved.

Examples of the fluorine surfactants having an oxy-($C_2$-$C_3$)alkylene group and a fluorinated hydrocarbon group and having a weight-average molecular weight of less than 20000 include "FTERGENT 251" made by NEOS Co., Ltd.; "FTX-218" made by NEOS Co., Ltd.; "Megafac F-477" made by DIC Corporation; "Megafac F-470" made by DIC Corporation; "Surflon S-381" made by AGC Seimi Chemical Co., Ltd.; "Surflon S-393" made by AGC Seimi Chemical Co., Ltd.; "Surflon KH-20" made by AGC Seimi Chemical Co., Ltd.; "Surflon KH-40" made by AGC Seimi Chemical Co., Ltd., and the like, and any of these can be suitably used.

Examples of the fluorine surfactants having an oxy-($C_{2-3}$) alkylene group and a fluorinated hydrocarbon group and having a weight-average molecular weight of 20000 or more include "EFTOP EF-352" made by JEMCO Inc.; "EFTOP EF-8041" made by JEMCO Inc.; "Unidyne TG-656" by Daikin Industries, Ltd., and the like. Any of these can be suitably used herein.

The amount of the fluorine surfactants used is not particularly limited, and for example can be selected within ranges of 0.01 to 5 parts by weight, preferably 0.01 to 3 parts by weight, and more preferably 0.03 to 1 parts by weight, based on 100 parts by weight of the total monomer components for constituting the base polymer of the viscoelastic material layer (X) [particularly based on 100 parts by weight of total monomer components for constituting the acrylic polymer containing alkyl(meth)acrylates as main monomer components]. When the amount of the fluorine surfactants used is less than 0.01 parts by weight, the surfactants may not sufficiently act to reduce viscoelasticity performance. In contrast, when fluorine surfactants are more than 5 parts by weight, the surfactants may exhibit insufficient viscoelasticity performance.

The viscoelastic material composition for the formation of the viscoelastic material layer (X) may further contain suitable additives according to the use thereof, in addition to the above-mentioned components (the fluorine surfactants, a base polymer, hollow microspheres, polymerization initiator, monomer mixture, the partially polymerized product, and the like). Examples of the usable additives include crosslinking agents (for example, polyisocyanate crosslinking agents, silicone crosslinking agents, epoxy crosslinking agents, alkyl-etherified melamine crosslinking agents, and the like); tackifiers (for example, tackifiers that are solid, semisolid, or liquid at room temperature including rosin derivative resins, polyterpene resins, petroleum resins, oil-soluble phenolic resins, and the like); plasticizers; fillers; aging inhibitors; and colorants (pigments, dyes, or the like). For example, when a base polymer is formed by photopolymerization, the layer may be colored by using pigments (coloring pigments) within the ranges not inhibiting photopolymerization. When the viscoelastic material layer (X) is to be colored to black, for example, carbon black may be used. For example, the amount of the carbon black as a coloring pigment used, is preferably 0.15 parts by weight or less (for example, 0.001 to 0.15 parts by weight), and more preferably 0.02 to 0.1 parts by weight, based on 100 parts by weight of the total monomer components for constituting the base polymer of the viscoelastic material layer (X) [particularly the total monomer components for constituting the acrylic polymer containing alkyl(meth)acrylates as main monomer components], in view of degree of coloration and not inhibiting photopolymerization reaction.

In the invention, in order that cells are mixed stably and caused to be present in the viscoelastic material composition, cells are preferably blended and mixed as the last component in the viscoelastic material composition. In particular, it is preferred that the viscoelastic material composition before mixing cells (hereinafter there may be a case where this composition is referred to as a "precursor for cell-containing viscoelastic material") has an increased viscosity. The viscosity of the precursor for the cell-containing viscoelastic material is not particularly limited, as long as it has a viscosity to maintain the mixed cells stably, but the viscosity is, for example, preferably 5 to 50 Pa·s (BH type viscometer, rotor: No. 5 rotor, number of revolutions: 10 rpm, temperature: 30°C.) and more preferably 10 to 40 Pa·s. When the viscosity of precursor is less than 5 Pa·s, there may be a case where the visosity is too low, and thus cell enlargement of mixed cells is immediately occur to thereby escape out of the system. In contrast, when the viscosity is more than 50 Pa·s, there may be a case where the viscosity is too high, and thus it is difficult to form the viscoelastic material layer (X).

The viscosity of the precursor for the cell-containing viscoelastic material may be adjusted, for example, by blending various polymer components such as acrylic rubbers and thickening additives; or by polymerizing a part of monomer components for forming the base polymer [for example, monomer components such as (meth)acrylates for forming acrylic base polymers, and the like]. Specifically, for example, a precursor for the cell-containing viscoelastic material having such a suitable viscosity for stably containing cells can be prepared by mixing monomer components for forming the base polymer [for example, monomer components such as (meth)acrylates for forming acrylic polymers, and the like] with polymerization initiators (for example, photoinitiators, and the like) to obtain a monomer mixture; performing a polymerization reaction of the monomer mixture depending on the type of polymerization initiators, to obtain a composition (a syrup type composition or syrup) (partially polymerized product) in which only a part of the monomer components have been polymerized; and blending and mixing hollow microspheres, and surfactants or additives according to necessity into the syrup. By introducing and mixing cells into the precursor for the cell-containing viscoelastic material, a viscoelastic material composition stably containing cells can be obtained. Surfactants and additives may be previously blended in advance into the monomer mixture as appropriate in the preparation of the syrup.

In the invention, the method to obtain a viscoelastic material composition by introducing and mixing cells into the precursor for the cell-containing viscoelastic material is not particularly limited, and a known technique for mixing cells can be employed. For example, an example of the device is one that includes, a stator having a multiplicity of fine teeth arranged on a disc having a through hole at the center part, and a rotor facing the stator and having fine teeth similar to the stator arranged on the disc. In this device, the precursor for the cell-containing viscoelastic material is introduced in between the teeth on the stator and the teeth on the rotor, and a gaseous component for forming cells (cell-forming gas) is introduced via the through hole into the precursor for the cell-containing viscoelastic material while rotating the rotor at high speed, thereby obtaining a viscoelastic material composition in which the cell-forming gas is finely dispersed and mixed in the precursor for the cell-containing viscoelastic material.

To suppress or prevent cell enlargement, it is desirable to perform the steps from the mixing of cells to the formation of the viscoelastic material layer (X) continuously as a series of steps. That is, it is desirable that a viscoelastic material composition is prepared by mixing cells in the above-mentioned method, and then the resulting viscoelastic material composition is used for the formation of the viscoelastic material layer (X).

The method to form the viscoelastic material layer (X) is not particularly limited. For example, the viscoelastic material layer (X) is formed by applying a viscoelastic material composition on a suitable support such as a release film or a base to form a layer of viscoelastic material composition, and by curing (for example, thermal curing or curing by an active energy ray) and/or drying the layer according to necessity. When curing by an active energy ray (photocuring) is performed, photopolymerization reaction is hindered by the oxygen in air. Accordingly, it is preferred that oxygen-blocking is carried out by affixing a release film (separator) to the coated layer, or by performing the photocuring in a nitrogen atmosphere, and the like. Further, the release film (separator), and the like used in the formation of the viscoelastic material layer (X) may be peeled during a suitable step at the time of producing the acrylic pressure-sensitive adhesive sheet of the invention or may be peeled at the time of using the produced acrylic pressure-sensitive adhesive sheet.

The thickness of the viscoelastic material layer (X) is not particularly limited, and, for example, can be selected within ranges of typically 200 to 5000 μm, preferably 300 to 4000 μm, and more preferably 400 to 3000 μm. When the viscoelastic material layer (X) has a thickness of less than 200 μm, the cushioning property is lowered, and the adhesiveness to curved surfaces or uneven surfaces is lowered. In contrast, when the thickness is more than 5000 μm, it is difficult to obtain the layer having a homogeneous thickness or the sheet having a homogeneous thickness. Further, the viscoelastic material layer (X) may have any of a single-layer form or multilayer form.

The viscoelastic material layer (X) itself can be a pressure-sensitive adhesive sheet having a pressure-sensitive adhesive force necessary for a pressure-sensitive adhesive sheet, by controlling the type and amount of the base polymer and the types and amounts of other additives to be contained in the viscoelastic material layer (X). Further, the viscoelastic material layer (X) can also be a non-adhesive sheet as a support by suitably selecting its formulation.

Pressure-Sensitive Adhesive Layers (Y)

The pressure-sensitive adhesive layers (Y) are formed on at least one face of the viscoelastic material layer (X), and include acrylic copolymers as main components. The acrylic copolymers are obtained by copolymerizing at least the monomers (m1), (m2) and (m3). The pressure-sensitive adhesive faces which are provided by the pressure-sensitive adhesive layers (Y) exhibit a good adhesiveness to various adherends including automotive coatings having low polarity, or low polarity adherends such as polyolefin (for example, polyethylene, polypropylene, and the like).

The monomer composition forming the pressure-sensitive adhesive layers (Y) includes the monomers (m1), (m2), and (m3) as essential monomer components, in which a content of the monomer (m1) is 50 to 85% by weight, a content of the monomer (m2) is 0,1 to 20% by weight, and a content of the monomer (m3) is 2 to 40% by weight, based on a total amount of monomer components constituting the monomer composition, That is, the monomer composition forming the pressure-sensitive adhesive layer (Y) includes the monomers (m1), (m2) and (m3) or the monomers (m1), (m2), (m3), and (m4), in which a content of the monomer (m1) is 50 to 85% by weight, a content of the monomer (m2) is 0.1 to 20% by weight, a content of the monomer (m3) is 2 to 40% by weight, and a content of the monomer (m4) is 0 to 20% by weight, based on a total amount of monomer components constituting the monomer composition. Further, in the invention, the monomers (m1), (m2), and (m3) are essential monomer components, and the monomer (m4) is an optional monomer component used according to necessity.

The monomer composition forming the pressure-sensitive adhesive layer (Y) means monomer mixtures forming an acrylic copolymer. The monomer composition is not particularly limited but, for example, acrylic pressure-sensitive adhesive compositions such as acrylic pressure-sensitive adhesive compositions having acrylic copolymers as essential components, acrylic pressure-sensitive adhesive compositions having monomer compositions or the partially polymerized composition thereof as essential components are formed, followed by forming the pressure-sensitive adhesive layer (Y). Examples of the acrylic pressure-sensitive adhesive compositions having acrylic copolymers as essential components include so called solvent type acrylic pressure-sensitive adhesive compositions, Further, examples of acrylic pressure-sensitive adhesive compositions which have the monomer compositions or the partially polymerized composition thereof forming the acrylic copolymer as essential components include so called active energy ray-curing type acrylic pressure-sensitive adhesive compositions. Further, the monomer composition may include crosslinking agents or other various additives according to necessity.

In the specification, a "pressure-sensitive adhesive composition" also includes the meaning of a "composition for forking pressure-sensitive adhesive". A "monomer composition" means a mixture consisting of monomer components forming an acrylic copolymer. Further, a "partially polymerized composition" means a composition partially polymerizing one or two or more components of the monomer compositions.

When the acrylic pressure-sensitive adhesive composition has acrylic copolymers as essential components, it is important that the acrylic copolymers are 80% by weight or more, and are preferably 90% by weight or more, based on the total amount of solid components of the acrylic pressure-sensitive adhesive composition.

Further, when an acrylic pressure-sensitive adhesive composition has a monomer composition or the partially polymerized composition thereof which forms an acrylic copolymer, as an essential component, it is important that the monomer composition or the partially polymerized composition thereof are 80% by weight or more, and preferably 90% by weight or more, based on the total amount of the acrylic pressure-sensitive adhesive compositions.

The monomer (m1) is an alkyl(meth)acrylate monomer including an alkyl group having 1 to 20 carbon atoms, which is represented by the following formula (1).

[Chem. 8]

$$CH_2=C(R^1)COOR^2 \qquad (1)$$

In formula (1), $R^1$ represents a hydrogen atom or a methyl group, and $R^2$ represents an alkyl group having 1 to 20 carbon atoms.

Further, an alkyl group having 1 to 20 carbon atoms of $R^2$ may be a linear or branched chain alkyl group, and a cyclic alkyl group.

The monomer (m1) is alkyl(meth)acrylate monomers including an alkyl group (linear chain and branched chain alkyl group) has 1 to 20 carbon atoms, which is represented by formula (1). Examples of the monomers include methyl (meth)acrylates, ethyl(meth)acrylates, n-propyl(meth)acrylates, isopropyl(meth)acrylates, n-butyl(meth)acrylates, isobutyl(meth)acrylates, sec-butyl(meth)acrylates, t-butyl(meth)acrylates, pentyl(meth)acrylates, isopentyl(meth)acrylates, hexyl(meth)acrylates, heptyl(meth)acrylates, n-octyl(meth)acrylates, isooctyl(meth)acrylates, 2-ethylhexyl(meth)acrylates, nonyl(meth)acrylates, isononyl(meth)acrylates, decyl(meth)acrylates, isodecyl(meth)acrylates, undecyl(meth) acrylates, dodecyl(meth)acrylates, tridecyl(meth)acrylates, tetradecyl(meth)acrylates, pentadecyl(meth)acrylates, hexadecyl(meth)acrylates, heptadecyl(meth)acrylates, octadecyl(meth)acrylates, nonadecyl(meth)acrylates and eicosyl (meth)acrylates. Among them, alkyl(meth)acrylate monomers which have an alkyl group having 2 to 14 carbon atoms are preferred, and alkyl(meth)acrylate monomers which have an alkyl group having 4 to 12 carbon atoms are further preferred. These alkyl(meth)acrylates may be used alone or in combination of two or more kinds thereof.

The content of the monomer (m1) is 50 to 85% by weight, preferably 53 to 82% by weight, and more preferably 55 to 80% by weight, based on the total amount (total monomer components) of monomer components constituting a monomer composition forming the pressure-sensitive adhesive layers (Y). When the content is less than 50% by weight, there may be a case where the flexibility is lowered. Further, when the content is more than 85% by weight, there may be problems from the viewpoint of pressure-sensitive adhesiveness (pressure-sensitive adhesive force, tackiness, durability, holding property, repelling resistance property).

The monomer (m2) is an N-hydroxyalkyl(meth)acryl amide monomer including a hydroxyalkyl group having 1 to 4 carbon atoms, which is represented by the following formula (2).

[Chem. 9]

$$CH_2=C(R^3)CONHR^4 \qquad (2)$$

In the formula (2), $R^3$ represents a hydrogen atom or a methyl group, and $R^4$ represents a hydroxyalkyl group having 1 to 4 carbon atoms.

The monomer (m2) can improve the cohesiveness and stress relaxation of the pressure-sensitive adhesive layer (Y). Further, the durability of the pressure-sensitive adhesive layer (Y) may be improved regarding the phenomena similar to those applying a constant force for a long period of time, similarly to the repelling resistance, and the foaming

peeling resistance test. Further, since the monomer (m2) has a hydroxyl group as a reactive functional group, a crosslinked structure may be formed by reacting a hydroxyl group with crosslinking agents having an isocyanate group, an epoxy group, and the like. Therefore, the pressure-sensitive adhesive layer (Y) is excellent in repelling resistance, holding force, foaming peeling resistance property and holding property. Further, the monomer (m2) has suitable polarity strength, and hence suitable polarity strength can be provided for the pressure-sensitive adhesive layer (Y).

The monomer (m2) is an N-hydroxyalkyl(meth)acryl amide monomer including a hydroxyalkyl group having 1 to 4 carbon atoms, which is represented by the following formula (2). Examples of the monomers include N-methylol (meth)acrylamide, N-(2-hydroxyethyl)acrylamides, N-(2-hydroxyethyl)methacrylamides, N-(2-hydroxypropyl)acrylamides, N-(2-hydroxypropyl)methacrylamides, N-(1-hydroxypropyl)acrylamides, N-(1-hydroxypropyl)methacrylamides, N-(3-hydroxypropyl)acrylamides, N-(3-hydroxypropyl)methacrylamides, N-(2-hydroxybutyl)acrylamides, N-(2-hydroxybutyl)methacrylamides, N-(3-hydroxybutyl)acrylamides, N-(3-hydroxybutyl)methacrylamides, N-(4-hydroxybutyl)acrylamides, N-(4-hydroxybutyl)methacrylamides and N-methyl-N-2-hydroxyethyl(meth)acrylamides. Among them, from the viewpoint of providing suitable cohesive force and stress relaxation, N-(2-hydroxyethyl)acrylamides, N-(2-hydroxyethyl) methacrylamides, N-methylol(meth)arylamide, N-(3-hydroxypropyl)acrylamides, and the like are preferred, and N-(2-hydroxyethyl)acrylamides, N-(2-hydroxyethyl)methacrylamides, and N-methylol(meth)arylamide are particularly preferred.

The content of the monomer (m2) is 0.1 to 20% by weight, preferably 0.5 to 18% by weight, and more preferably 1 to 15% by weight, based on the total amount (total monomer components) of monomer components constituting a monomer composition forming the pressure-sensitive adhesive layers (Y). When the content is less than 0.1% by weight, there may be a case where the pressure-sensitive adhesive layer (Y) cannot exhibit suitable cohesive force and stress relaxation, In contrast, when the content is more than 20% by weight, there may be a case that sufficient tackiness or pressure-sensitive adhesive force is not obtained.

The monomer (m3) vinyl monomer having a nitrogen atom in a backbone thereof has at least one double bond of carbon atoms in its molecules (in molecular backbone thereof) and is a monomer having a nitrogen atom. Further, the monomer (m2) N-hydroxyalkyl(meth)acryl amide monomer including a hydroxyalkyl group having 1 to 4 carbon atoms is not included in the monomer (m3). In the specification, "vinyl monomer having a nitrogen atom in a backbone thereof" is also referred to as "nitrogen-containing vinyl monomer".

Since the acrylic pressure-sensitive adhesive sheet of the invention uses the monomer (m3) nitrogen-containing vinyl monomer which is the monomer component constituting the acrylic copolymer as main components of the acrylic pressure-sensitive adhesive layer, pressure-sensitive adhesive force, cohesive force, and the like may be improved. Further, although the monomer (m2) component has insufficient compatibility with the monomer (m1), the compatibility is increased by adding the monomer (m3) component. Further, adhesive reliability to low polarity adherends, automotive acid-rain resistant coatings, and the like may be improved.

More specifically, examples of the monomer (m3) nitrogen-containing vinyl monomer include at least one kind of monomer selected from N-vinyl cyclic amides represented by the following formula (3) and (meth)acrylamides.

[Chem. 10]

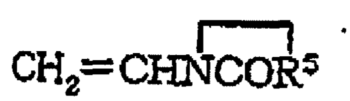

(3)

In formula (3), $R^5$ represents a divalent organic group.

Further, in formula (3), $R^5$ is preferably a saturated or unsaturated hydrocarbon group, and is more preferably a saturated hydrocarbon group (for example, an alkylene group having 3 to 5 carbon atoms),

Examples of N-vinyl cyclic amide represented by formula (3) include N-vinyl-2-pyrrolidone, N-vinyl-2-piperidone, N-vinyl-3-morpholinone, N-vinyl-2-caprolactam, N-vinyl-1,3-oxazin-2-one, N-vinyl-3,5-morpholine dione, N-vinylpyridine, N-vinylpyrimidine, N-vinylpiperazine and N-vinylpyrrole. Among them, N-vinyl-2-pyrrolidone and N-vinyl-2-caprolactam are particularly preferred.

Further, examples of (meth)acrylamides include (meth)acrylamides, N-alkyl(meth)acrylamides and N,N-dialkyl (meth)acrylamides. Examples of N-alkyl(meth)acrylamides include N-ethyl(meth)acrylamides, N-n-butyl(meth)acrylamides and N-octyl acrylamides. Further, amino group-containing (meth)acrylamides, and the like, such as dimethyl amino ethyl(meth)acrylamides and diethyl amino ethyl(meth)acrylamides are also exemplified. Examples of N,N-dialkyl (meth)acrylamides include N,N-dimethyl(meth)acrylamides, N,N-diethyl(meth)acrylamides, N,N-dipropyl(meth)acrylamides, N,N-diisopropyl(meth)acrylamides, N,N-di(n-butyl) (meth)acrylamides and N,N-di(t-butyl) (meth)acrylamides. Among them, from the viewpoint of easily obtaining the balance of adhesive reliability and flexibility of pressure-sensitive adhesive sheets, (meth)acrylamide (for example, N,N-dialkyl acrylamide such as N,N-diethyl acrylamide, N,N-dimethyl

acrylamide) having one or two N-alkyl groups having 1 to 4 carbon atoms (more preferably 1 to 2) are preferably used.

Further, examples of nitrogen-containing vinyl monomer other than N-vinyl cyclic amide and (meth)acrylamides include cyclic (meth)acrylamides having an N-acryloyl group such as (meth)acryloyl morpholine (meth)acryloyl pyrrolidone, and(meth)acryloyl pyrrolidine; monomers having an amino group such as aminoethyl (meth)acrylate, N,N-dimethylaminoethyl (meth)acrylate and N,N-dimethylaminopropyl (meth)acrylate; monomers having maleimide backbone such as N-cyclohexylmaleimide and N-phenylmaleimide; and itaconimide monomers such as N-methylitaconimide, N-ethylitaconimide, N-butylitaconimide, N-2-ethylhexylitaconimide, N-laurylitaconimide and N-cyclohexylitaconimide, cyano acrylate monomers such as acrylonitrile and methacrylonitrile; succinimide monomers such as N-(meth)acryloyloxy methylene succinimide, N-(meth)acryloyl-6-oxy hexamethylene succinimide, and N-(meth)acryloyl-8-oxyoctamethylenesuccinimides.

Incidentally, as the monomer (m3) nitrogen-containing vinyl monomer, when (meth)acrylamides is used in combination with N-vinyl cyclic amide represented by formula (3), it is useful from the viewpoint of easily obtaining the balance of pressure-sensitive adhesive force and cohesive force, flexibility and processability of the pressure-sensitive adhesive sheet

The content of the monomer (m3) nitrogen-containing vinyl monomer is 2 to 40% by weight, preferably 2.5 to 35% by weight, and more preferably 3 to 30% by weight, based on the total amount of the monomer components constituting a monomer composition forming the pressure-sensitive adhesive layer (Y). When the content is less then 2% by weight, there may be problems from the viewpoint that sheet processability is deteriorated and adhesive reliability is not easily exhibited. In contrast, when the content is more then 40% by weight, there may be problems where sheet flexibility is lowered and tackiness is lowered.

Although the monomer (m2) is common to the monomer (m3) in that they have double bonds of carbon atoms and have nitrogen atom in molecular backbone, but the monomer (m2) is excluded from the monomer (m3). The monomer (m3) may be used alone or in combination of two or more kinds thereof.

Further, as a monomer component constituting an acrylic copolymer in the invention, a monomer (m4) monomer (there may be a case where such is referred to as a "copolymerizable monomer" for short) copolymerizable with the monomers (m1), (m2) and (m3), in addition to the monomers (m1) to (m3), may be used. When a copolymerizable monomer is used, the balance of pressure-sensitive adhesiveness is easily obtained. Further, the monomer (m4) may be used alone or in combination of two or more kinds thereof.

"Balance of pressure-sensitive adhesiveness" means balance of properties such as pressure-sensitive adhesive force, tackiness, durability, holding property, and repelling resistance.

These monomer (m4) copolymerizable monomers are preferably monomers so as to obtain the balance of pressure-sensitive adhesiveness, monomers for being able to impart functions such as crosslinked points. Examples of the monomer (m4) include carboxyl group-containing monomers such as ethylenically unsaturated monocarboxylic acid (for example, acrylic acid, methacrylic acid, crotonic acid, carboxyethyl acrylate, carboxypentyl acrylate, and the like), ethylenically unsaturated dicarboxylic acid (for example, maleic acid, itaconic acid, citraconic acid, and the like), ethylenically unsaturated dicarboxylic anhydrides (for example, maleic anhydride, itaconic anhydride, and the like); hydroxyl group-containing monomers such as 2-hydroxyethyl(meth)acrylates, 2-hydroxypropyl(meth)acrylates, 4-hydroxybutyl (meth)acrylates, 6-hydroxyhexyl(meth)acrylates, 8-hydroxyoctyl(meth)acrylates, 10-hydroxydecyl (meth)acrylates, 12-hydroxylauryl(meth)acrylates, and (4-hydroxymethylcyclohexyl)-methyl acrylate; sulfonic group-containing monomers such as 2-acrylamido-2-methylpropanesulfonic acid and sulfopropyl acrylate; phosphate group-containing monomers such as 2-hydroxyethylacryloyl phosphate; vinyl monomers such as vinyl acetate, N-vinylcarboxamide, styrene, and N-vinylcaprolactam; and acrylic ester monomers such as glycidyl (meth)acrylates, tetrahydrofurfuryl(meth) acrylates, polyethylene glycol(meth)acrylates, polypropylene glycol(meth)acrylates, fluorine (meth)acrylates, silicone (meth)acrylates, and 2-methoxyethyl acrylate.

Among them, as copolymerizable monomers, hydroxyl group-containing monomers, carboxyl group-containing monomers, and acrylic ester monomers are preferred from the viewpoint of increasing the affinity of the monomers (m1), (m2) and (m3). Particularly, hydroxyl group-containing monomers are preferably 2-hydroxyethyl acrylates, carboxyl group-containing monomers are preferably an acrylic acid, and acrylic ester monomers are preferably 2-methoxyethyl acrylate.

Further, the examples of the monomer (m4) copolymerizable monomers also include alkyl(meth)acrylate monomers having a cyclic alkyl group, such as cyclopentyl (meth)acrylates, cyclohexyl(meth)acrylates, and isobomyl (meth) acrylates.

When the monomer (m4) which is an optional component is used as a monomer, the total content of the monomers (m1), (m2) and (m3) as essential components is preferably 80% by weight or more (for example, 80 to 99% by weight), is more preferably 85% by weight or more (for example, 85 to 99% by weight), and is even more preferably 90% by weight or more (for example, 90 to 99% by weight), based on the total monomer components constituting the monomer composition. When the total amount of the monomers (m1), (m2) and (m3) is less than 80% by weight, there may be problems from the viewpoint of adhesive reliability to adherends.

That is, when the monomer (m4) is used as a monomer component, the monomer (m4) is preferably 20% by weight or less (for example, 1 to 20% by weight), preferably 15% by weight or less (for example, 1 to 15% by weight), more preferably 10% by weight or less (for example, 1 to 10% by weight) based on the total amount (total monomer components) of monomer components constituting a monomer composition forming the pressure-sensitive adhesive layer (Y). When the content is more than 20% by weight, there may be problems in the balance of adhesive reliability and flexibility as described above.

In the invention, the acrylic copolymer is formed by using a known or typical polymerization method (for example, solution polymerization, emulsion polymerization, mass polymerization, photopolymerization using photopolymerization initiators, and the like). Among them, from the viewpoint of obtaining a pressure-sensitive adhesive layer excellent in quality stability, solution polymerization or photopolymerization is preferred in the invention.

The solution polymerization is useful in the case of copolymerizing monomers where the compatibility is not good. In such cases, single copolymerization of monomer components [copolymerization of monomer components only] may be difficult; however, a copolymer is easily obtained by solution polymerization through solvents without the above-mentioned problem.

In the solution polymerization, various kinds of general solvents can be used. Examples of these solvents include organic solvents, for example, esters such as ethyl acetate and n-butyl acetate; aromatic hydrocarbons such as toluene and benzene; aliphatic hydrocarbons such as n-hexane and n-heptane; alicyclic hydrocarbons such as cyclohexane, and methyl cyclohexane; ketones such as methyl ethyl ketone, and methyl isobutyl ketone. The solvents can be used alone or in combination of two or more kinds thereof.

Further, it is preferred that a curing reaction by heat using thermal polymerization initiators is used in solution polymerization. Examples of the thermal polymerization initiators include azo thermal polymerization initiators such as 2,2'-azobisisobutyronitrile, 2,2'-azobis-2-methylbutyronitrile, dimethyl-2,2'-azobis(2-methylpropionate), 4,4'-azobis-4-cyanovaleric acid, azobisisovaleronitrile, 2,2'-azobis(2-amidinopropane) dihydrochloride, 2,2'-azobis[2-(5-rnethyl-2-imdazolin-2-yl)propane]dihydrochloride, 2,2'-azobis(2-methylpropionamidine) disulfate, and 2,2'-azobis(N,N'-dimethyleneisobutylamidine) dihydrochloride; peroxide thermal polymerization initiators such as dibenzoyl peroxide and tert-butyl permaleate; and redox thermal polymerization initiators. Thermal polymerization initiators can be used alone or in combination of two or more kinds thereof.

The amount of the thermal polymerization initiators used is not particularly limited, and may be the range conventionally used as the thermal polymerization initiators. For example, the amount is preferably 0.01 to 5 parts by weight, and more preferably 0.05 to 3 parts by weight, based on 100 parts by weight of monomer components constituting an acrylic copolymer. When the amount is less than 0.01 parts by weight, the reaction slows down and there may be a problem from the viewpoint of processing. In contrast, when the amount is more than 5 parts by weight, the molecular weight of obtained polymerized product is lowered and pressure-sensitive adhesiveness is lowered.

Further, when photopolymerization is used, it is particularly useful from the viewpoint of workability, thick coating, and less environmental load.

It is preferred that curing reaction due to active energy rays using photopolymerization initiators is used in photopolymerization. Examples of the active energy rays include ionizing radiations such as α-rays, β-rays, γ-rays, neutron beams, and electron beams; and ultraviolet rays. In particular, the ultraviolet rays are preferably used. The irradiation dose and the irradiation time of an active energy ray, and the like are not particularly limited, as long as the photopolymerization initiators do not inhibit the reaction of monomer components.

Photopolymerization initiators are not particularly limited. However, examples of the usable initiators, include benzoin ether photopolymerization initiators, acetophenone photopolymerization initiators, α-ketone photopolymerization initiators, aromatic sulfonyl chloride photopolymerization initiators, photo-active oxime photopolymerization initiators, benzoin photopolymerization initiators, benzyl photopolymerization initiators, benzophenone photopolymerization initiators, ketal photopolymerization initiators, thioxanthone photopolymerization initiators, and the like. Further, photopolymerization initiators may be used alone or in combination of two or more kinds thereof.

Specifically, examples of the ketal photopolymerization initiators include 2,2-dimethoxy-1,2-diphenylethan-1-one (for example, trade name "Irgacure 651", made by Ciba Japan K.K.). Examples of the α-hydroxyketone photopolymerization initiators include 1-hydroxycyclohexyl phenyl ketone ("Irgacure 184" made by Ciba Japan K.K.), 2-hydroxy-2-methyl-1-phenyl-propan-1-one ("Darocure 1173" made by Ciba Japan K.K.) and 1-[4-(2-hydroxyethoxy)-phenyl]-2-hydroxy-2-methyl-1-propan-1-one ("Irgacure 2959" made by Ciba Japan K.K.). Examples of the α-aminoketone photopolymerization initiators include 2-methyl-1-[4-(methylthio)phenyl]-2-morpholinopropan-1-one ("Irgacure 907" made by Ciba Japan K.K.) and 2-benzyl-2-dimethylamino-1-(4-morpholinophenyl)-butanon-1 ("Irgacure 369" made by Ciba Japan K.K.). Examples of the acylphosphine oxide photopolymerization initiators include 2,4,6-trimethylbenzoyldiphenylphosphine oxide ("Lucirin TPO" made by BASF corporation). Examples of the benzoin ether photopolymerization initiators include benzoin methyl ether, benzoin ethyl ether, benzoin propyl ether, benzoin isopropyl ether, benzoin isobutyl ether, 2,2-dimethoxy-1,2-diphenylethan-1-one and anisole methyl ether. Examples of the acetophenone photopolymerization initiators include 2,2-diethoxyacetophenone, 2,2-dimethoxy-2-phenylacetophenone, 1-hydroxycyclohexyl phenyl ketone, 4-phenoxydichloroacetophenone and 4-(t-butyl)-dichloroacetophenone. Examples of the aromatic sulfonyl chloride photopolymerization initiators include 2-naphthalenesulfonyl chloride. Examples of the photoactive oxime photopolymerization initiators include 1-phenyl-1,1-propanedione-2-(o-ethoxycarbonyl)-oxime. Examples of the benzoin photopolymerization initiators include benzoin. Examples of the benzyl photopolymerization initiators include benzil. Examples of the benzophenone photopolymerization initiators include benzophenone, benzoylbenzoic acid, 3,3'-dimethyl-4-methoxybenzophenone, polyvinylbenzophenone and $\alpha$-hydroxycyclohexyl phenyl ketone. Examples of the ketal photopolymerization initiators include benzyl dimethyl ketal. Examples of the thioxanthone photopolymerization initiators include thioxanthone, 2-chlorothioxanthone, 2-methylthioxanthone, 2,4-dimethylthioxanthone, isopropylthioxanthone, 2,4-dichlorothioxanthone, 2,4-diethyl thioxanthone, 2,4-diisopropylthioxanthone and dodecylthioxanthone.

The amount of the photopolymerization initiators used is not particularly limited, and, for example, the amount is preferably 0.001 to 5 parts by weight, and more preferably 0.002 to 3 parts by weight, based on 100 parts by weight of the monomer components constituting the acrylic polymer. When the amount is less than 0.001 parts by weight, there may be a case that reaction velocity slows down, and the time until polymerization is finished is lengthened. In contrast, when the amount is more than 5 parts by weight, there is may be a case that the molecular weight of the obtained polymerized product is lowered, and pressure-sensitive adhesiveness is lowered.

The glass transition temperature (Tg) of acrylic copolymers is preferably -10˚C or less (for example, -70 to -10˚C), and more preferably -20˚C or less (for example, - 70˚C to -20˚C). When the pressure-sensitive adhesive layer (Y) is formed using a monomer composition such that Tg of the acrylic copolymers which are the main components thereof falls within the range, the pressure-sensitive adhesive layer (Y) exhibits good adhesive performance (tackiness, and the like) at room temperature (approximately 5˚C to 35˚C, particularly 20˚C to 25˚C).

Further, Tg of the acrylic copolymer is the glass transition temperature (theoretical value) represented by the following formula.

$$1/Tg = (W_1/Tg_1) + (W_2/Tg_2) + \ldots + (W_n/Tg_n)$$

In the formula, Tg represents the glass transition temperature (unit:K) of an acrylic polymer, $Tg_i$ (i=1,2...n) represents the glass transition temperature (unit:K) of a homopolymer of monomer i, and $W_i$ (i=1,2...n) represents the weight ratio in the total monomer components of monomer i. Further, the formula is the calculation formula of Tg when the acrylic polymer includes n kinds of the monomer component (monomer 1, monomer 2, ... and monomer n).

In the invention, from the viewpoint that the pressure-sensitive adhesive layer (Y) is crosslinked to increase durability, it is preferred that crosslinking agent (crosslinking component) is added to the monomer composition.

The crosslinking agents are not particularly limited, but, for example, polyisocyanate compounds, epoxy compounds, aziridine compounds, metal chelate compounds, and melamine compounds are preferably used. Further, polyfunctional (meth)acrylate may be used as a crosslinking agent. Among them, from the viewpoint of easy handling for the balance of pressure-sensitive adhesiveness and workability, polyisocyanate compounds and polyfunctional monomers are preferred. Further, crosslinking agents may be used alone or two or more crosslinking agents may be used by mixing.

Examples of the polyisocyanate compounds include tolylene diisocyanate, hexamethylene diisocyanate, polymethylene polyphenyl isocyanate, diphenyl methane diisocyanate, a dimer of diphenyl methane diisocyanate, reaction products of trimethylol propane and tolylene diisocyante, reaction products of trimethylol propane and hexamethylene diisocyante, polyether polyisocyanate and polyester polyisocyanate.

When polyfunctional (meth)acrylates are a compound having at least two (meth)acryloyl groups, these can be used without particular limitation. Examples of the polyfunctional (meth)acrylates include trimethylol propane tri(meth) acrylate, tetramethylol methane tetxaacrylate, pentaerythritol di(meth)acrylates, pentaerythritol tri(meth)acrylates, pentaerythritol tetra(meth)acrylates, 1,2-ethylene glycol di(meth)acrylates, 1,4-butylene glycol di(meth)acrylate, 1,6-hexanediol di(meth)acrylates, 1,12-dodecanediol di(meth)acrylates, dipentaerythritol monohydroxy penta(meth)acrylate, dipentaerythritol hexa (meth)acrylate, polyethyleneglycol di(meth)acrylate, hexanediol di(meth)acrylate, (poly)ethylene glycol di(meth)acrylate, (poly)propylene glycol di(meth)acrylate, neopentyl glycol di(meth)acrylate, tetramethylol methane tri(meth)acrylate, allyl(meth)acrylate, vinyl(meth)acrylate, epoxy acrylate, polyester acrylate, urethane acrylate and reactive hyperbranched polymers having a plurality of (meth)acryloyl groups at the terminal [for example, trade name "CN2300", "CN2301", "CN2320", and the like, made by SARTOMER corporation].

The amount of the crosslinking agents added is specifically not limited, so far as the amount is capable of obtaining the desirable gel fraction. For example, when the acrylic pressure-sensitive adhesive composition has acrylic copolymers as essential components, the amount is preferably 0.001 to 5 parts by weight, is more preferably 0.002 to 4 parts by weight, and is further preferably 0.002 to 3 parts by weight, based on 100 parts by weight of acrylic copolymer.

When the amount is less than 0.001 parts by weight, there is a concern that the cohesive force of the pressure-sensitive adhesive layer (Y) is lowered. On the other hand, when the amount is more than 5 parts by weight, there is a concern that flexibility or tackiness will be lowered in the pressure-sensitive adhesive layer (Y).

Further, when the acrylic pressure-sensitive adhesive composition has a monomer composition or the partially polymerized composition thereof as an essential component, in the amount of the crosslink agent added, the reference of "100 parts by weight of the acrylic copolymer" as described above is changed into "100 parts by weight of the total amount of the monomer components constituting the acrylic copolymer". That is, the amount is preferably 0.001 to 5 parts by weight, preferably 0.002 to 4 parts by weight, and 0.002 to 3 parts by weight, based on 100 parts by weight of total amount of the monomer components constituting the acrylic copolymer.

Examples of other additives include tackifiers such as rosin derivative resins, polyterpene resins, petroleum resins, and oil-soluble phenolic resins; plasticizers; fillers; aging inhibitors; and surfactants. Further, a crosslinking accelerator may be used. These additives are used within the range of not inhibiting the effect of the invention.

The methods of forming an acrylic pressure-sensitive adhesive composition from monomer compositions are not particularly limited but, for example, include the method of obtaining an acrylic copolymer from monomer compositions so as to homogeneously mix additives into the acrylic copolymer according to necessity; and the method of homogeneously mixing additives, according to necessity, into the partially polymerized composition obtained by polymerizing part of the monomer compositions.

For example, an acrylic pressure-sensitive adhesive composition having acrylic copolymers as essential components is formed by heating a monomer composition including monomer components constituting the acrylic copolymer, organic solvent, and a composition containing additives such as a thermal polymerization initiator, according to necessity, to obtain a composition containing acrylic copolymers, when the acrylic copolymer is formed by solution polymerization; and by adding additives, according to necessity, to the composition. Further, when acrylic copolymers are formed by photopolymerization, an acrylic pressure-sensitive adhesive composition having monomer compositions or the partially polymerized composition thereof forming acrylic copolymer, as an essential component is formed by adding photopolymerization initiator to the monomer composition including monomer components forming acrylic monomer copolymers to obtain a partially polymerized composition with the irradiation of active energy ray, by adding additives thereto according to necessity.

The pressure-sensitive adhesive layer (Y) is formed by applying these acrylic pressure-sensitive adhesive compositions on a suitable support to form a coated layer, followed by subjecting the coated layer to heating, drying, irradiating an active energy ray, and the like, according to necessity.

Further, coating methods used at the time of coating are not particularly limited, and known methods may be used. Examples of these methods include a slot die coating, a reverse gravure coating, a microgravure coating, a dip coating, a spin coating, a brush coating, a roll coating, a flexo printing, and the like. As the coating equipment used at the time of coating, coating equipment which is generally used may be used without specific limitation. Examples of this coating equipment include roll coaters such as a reverse coater and a gravure coater; a curtain coater; a lip coater; a die coater; and a knife coater.

From the viewpoint of the balance of pressure-sensitive adhesiveness (pressure-sensitive adhesive force, tackiness, durability, and holding property), the pressure-sensitive adhesive layer (Y) has preferably a gel fraction (solvent insoluble fraction) of 20 to 80% by weight, and is more preferably 25 to 75% by weight. When the gel fraction is less than 20% by weight, there is a concern that the cohesive force will be insufficient and adhesive reliability or processability will be lowered. Whereas when the gel fraction is more than 80% by weight, there is a concern that the tackiness will be insufficient, or the adhesive reliability will be lowered.

The gel fraction of the pressure-sensitive adhesive layer (Y) may be determined in the following manner. A porous polytetrafluoroethylene film (trade name: Nitofuron (registered trade mark) NTF-1122, made by Nitto Denko corporation, thickness of 85μm) is cut into a size of 100mm×100mm, and, additionally, kite string (thickness: 1.5mm) is cut into a length of approximately 100mm and the weight thereof is measured (the weight of porous polytetrafluoroethylene film and kite string is regarded as "weight (A)"). Subsequently, the predetermined amount (approximately 1g) of the pressure-sensitive adhesive layer (Y) is enclosed with the porous polytetrafluoroethylene film. An enclosed pore is tied using kite string, and packing (there may be a case where such is referred to as "pressure-sensitive adhesive layer-containing packing") is prepared such that the pressure-sensitive adhesive layer (Y) is enclosed. This pressure-sensitive adhesive layer-containing packing is weighed, the weight (A) of the porous polytetrafluoroethylene film and kite string is subtracted from the weight of this pressure-sensitive adhesive layer-containing packing, and the weight of the pressure-sensitive adhesive layer (Y) is determined. Further, the weight of the pressure-sensitive adhesive layer (Y) is regarded as weight (B). Subsequently, pressure-sensitive adhesive layer-containing packing is immersed in 45ml of ethyl acetate at room temperature (for example, 23˚C) for 7 days, and the sol component only in the pressure-sensitive adhesive layer (Y) is eluted out of a porous polytetrafluoroethylene film. After immersion, the pressure-sensitive adhesive layer-containing packing immersed in ethyl acetate for 7 days is taken out, ethyl acetate which is stuck on the porous polytetrafluoroethylene film is wiped off and dried with a dryer at 130˚C for 2 hours. After drying, the pressure-sensitive

adhesive layer-containing packing was weighed. The weight of the pressure-sensitive adhesive layer-containing packing is regarded as weight (C).
The gel fraction (% by weight) of the pressure-sensitive adhesive layer (Y) is calculated by the following formula:

$$\text{Gel fraction (\% by weight)}=[(C-A)/B\times 100]$$

The thickness of the pressure-sensitive adhesive layer (Y) is not particularly limited, and is preferably 10 to 400 $\mu$m, more preferably 20 to 200 $\mu$m, and still more preferably 30 to 100 $\mu$m, regarding the point of ensuring good adhesive performance (for example, pressure-sensitive adhesive strength). The pressure-sensitive adhesive layer (Y) may have a single-layer form or a laminated form.

Release liner

The pressure-sensitive adhesive layer (Y) surface (pressure-sensitive adhesive face) of the acrylic pressure-sensitive adhesive sheet of the invention may be protected by a release liner (separator, release film) until being used. Further, the viscoelastic material layer (X) surface also may be protected by a release liner. Further, when the viscoelastic material layer (X) surface has pressure-sensitive adhesiveness, or when known pressure-sensitive adhesive layers are formed on the face opposite to the face where the pressure-sensitive adhesive layer (Y) of the viscoelastic material layer (X) is formed, there may be a case where an acrylic pressure-sensitive adhesive sheet acts as a double-coated pressure-sensitive adhesive sheet. The pressure-sensitive adhesive face, in the case of acting as a double-coated pressure-sensitive adhesive sheet, may be protected by two sheets of release liners respectively, and may be protected in the manner where one sheet of release liner of which both faces are release faces is wound with a roll. Release liner is used as a protecting material of the pressure-sensitive adhesive layer (Y) and is peeled when the layer is affixed to adherends. Further, a release liner is peeled at the time of using the acrylic pressure-sensitive adhesive sheet of the invention (at the time of adhering) is not included in the "base" shown in the following.
These liners can use typical release paper, and are not particularly limited. Examples of the usable liners include a base having a release treated layer, a low adhesive base containing fluorine polymers and a low adhesive base containing non-polarity polymers. Examples of the low adhesive base containing fluorine polymer include a plastic film, a paper, or the like, of which the surface is treated by release treating agents such as silicone, long chain alkyl, fluorine, and molybdenum sulfide. Examples of the fluorine polymer of the low adhesive base containing fluorine polymers include polytetrafluoroethylene, polychlorotrifluoroethylene, polyvinyl fluoride, polyvinylidene fluoride, tetrafluoroethylene/hexafluoropropylene copolymer and chlorofluoroethylene/vinylidene fluoride copolymer. Examples of the non-polarity polymer of low adhesive base containing non-polarity polymers include olefin resins (for example, polyethylene, polypropylene, and the like). Further, a release liner may be formed by known and typical methods. Further, the thickness of the release liner is not particularly limited.

Other layers

The acrylic pressure-sensitive adhesive sheet of the invention may have other layers (for example, an intermediate layer, an undercoat, and the like) within a range not damaging the effect of the invention. More specifically, examples of the intermediate layers include a coating layer of a release agent to impart releasability, a coating layer of an undercoat agent to improve close adhesive force, a layer to impart good deformability to the sheet, a layer to provide a larger adhesive area to adherends, a layer to increase an adhesive force to adherends, a layer to allow the sheet to satisfactorily follow the surface shape of adherends, a layer to more satisfactorily reduce the adhesive force of the sheet by heating, a layer to allow the sheet to be peeled more satisfactorily after heating, and the like. Further, the sheet may have known and typical pressure-sensitive adhesive layers other than the pressure-sensitive adhesive layer (Y).

Base

When the acrylic pressure-sensitive adhesive sheet of the invention has bases, the bases are not particularly limited and, for example, include suitable thin leafy body e.g. paper bases such as papers; fiber bases such as fabrics, nonwovens, and nets; metal bases such as metal foils and metal plates; plastic bases such as films or sheets of various resins (olefin resin, polyester resin, polyvinyl chloride resin, vinyl acetate resin, amide resin, polyimide resin, polyetherether ketone (PEEK), polyphenylene sulfide (PPS), and the like); rubber bases such as rubber sheets; foams such as foam sheets or the laminators (particularly, laminators of plastic bases with other bases, laminators of plastic films (or sheets), and the like), all of which can be used.

The thickness of the base is not particularly limited and, for example, may be preferably 10 to 500 μm, more preferably 12 to 200 μm, and further preferably 15 to 100 μm, Further, the base may be a single layer, or plural layers. Further, on the base, according to necessity, various treatments such as rear treatment, antistatic treatment, and undercoat treatment, may be performed.

Method for Producing Acrylic Pressure-Sensitive Adhesive Sheets

The acrylic pressure-sensitive adhesive sheet in the invention is produced by preparing an acrylic pressure-sensitive adhesive composition from monomer compositions forming a pressure-sensitive adhesive layer (Y); forming the pressure-sensitive adhesive layer (Y) on at least one face of the viscoelastic material layer (X) containing hollow microspheres by the acrylic pressure-sensitive adhesive composition prepared in the above-mentioned step.

In a step of forming the pressure-sensitive adhesive layer (Y) on at least one face of the viscoelastic material layer (X) containing hollow microspheres, for example, an acrylic pressure-sensitive adhesive composition is applied on at least one face of the viscoelastic material layer (X) to form a coated layer, and then is heated, dried, and irradiated with an active energy ray according to necessity, so that the pressure-sensitive adhesive layer (Y) is formed on the viscoelastic material layer (X); or the acrylic pressure-sensitive adhesive composition is applied on a suitable support (for example the above release liner, and the like) to form a coated layer, and then is heated, dried, and irradiated with an active energy ray, according to necessity, to form the pressure-sensitive adhesive layer (Y) on the suitable support, and then the pressure-sensitive adhesive layer (Y) on the support is transferred on at least one face of the viscoelastic material layer (X) to form the pressure-sensitive adhesive layer (Y) on the viscoelastic material layer (X), thereby forming the pressure-sensitive adhesive layer (Y) on at least one face of the viscoelastic material layer (X).

Further, when acrylic copolymers are obtained by photopolymerization, for example, through the following (i) to (iii), the method for forming the acrylic pressure-sensitive adhesive sheet having the pressure-sensitive adhesive layer (Y) on at least one face of the viscoelastic material layer (X) containing hollow microspheres may be used. When these methods are used, it is advantageous from the viewpoint of workability. For example, when the viscoelastic material layer (X) is used as a support and the viscoelastic material layer (X) is produced using curing reaction by active energy ray, a viscoelastic material composition forming the viscoelastic material layer (X), and an acrylic pressure-sensitive adhesive composition forming the pressure-sensitive adhesive layer (Y) may be applied together, the pressure-sensitive adhesive layer (Y) may be produced while producing the viscoelastic material layer (X); it is advantageous from the viewpoint that an affixing step may be omitted compared with the method where the viscoelastic material layer (X) and the pressure-sensitive adhesive layer (Y) are produced respectively to affix them.

Step (i): preparing an acrylic pressure-sensitive adhesive composition including: a monomer composition or a partially polymerized composition thereof, including the following monomers (m1), (m2) and (m3) as essential monomer components, in which a content of the monomer (m1) is 50 to 85% by weight, a content of the monomer (m2) is 0.1 to 20% by weight, and a content of the monomer (m3) is 2 to 40% by weight, based on a total amount of monomer components constituting the monomer composition; and 0.01 to 2 parts by weight of a photopolymerization initiator based on 100 parts by weight of the monomer components constituting the monomer composition or the partially polymerized composition thereof.
Step (ii): applying the acrylic pressure-sensitive adhesive composition prepared in the step (i) on a support,
Step (iii): curing the pressure-sensitive adhesive composition by irradiating an active energy ray to the acrylic pressure-sensitive adhesive composition applied on the support to form the pressure-sensitive adhesive layer (Y).

Acrylic pressure-sensitive adhesive sheet

The acrylic pressure-sensitive adhesive sheet of the invention has a construction where the pressure-sensitive adhesive layer (Y) is formed on at least one face of the viscoelastic material layer (X), and exhibits good adhesiveness to various adherends such as coatings, metals, and plastics on a pressure-sensitive adhesive face provided by the pressure-sensitive adhesive layer (Y). This is because the monomer (m2) which is monomer components constituting the acrylic copolymer as main components of a pressure-sensitive adhesive composition forming the pressure-sensitive adhesive layer (Y), and which has strength of suitable polarity is used, and therefore the pressure-sensitive adhesive layer (Y) has a suitable polarity, and a suitable cohesive force and has stress relaxation.

Examples of the coatings of the adherends include automotive coatings such as acid-rain resistant coatings, and coatings where a surface control agent is bleeding out. Examples of the acid-rain resistant coatings include various coatings such as polyester/melamine coatings, alkyd/melamine coatings, acrylic/melamine coatings, acrylic/urethane coatings, and acrylic/polyacid curing agent coatings. Examples of the coatings where surface control agents are bled out include coatings where surface control agents such as acrylic, vinyl, silicone, and fluorine are bleeding out.

The acrylic pressure-sensitive adhesive sheet of the invention exhibits good adhesiveness to low polarity

coatings such as coatings having small melamine content, or coatings having no melamine, or coatings of which a low polarity surface control agent (for example, an acrylic surface control agent such as butyl acrylate, and the like) bleeds out, among the coatings, since the pressure-sensitive adhesive layer (Y) has a suitable polarity, and suitable cohesive force and stress relaxation, as described above.

The acrylic pressure-sensitive adhesive sheet of the invention is particularly preferably used with coatings having a ratio of the peak derived from an ester stretching vibration (at 1730 $cm^{-1}$) (ester peak; ester absorption intensity; ester intensity) to the peak derived from a melamine stretching vibration (at 814 $cm^{-1}$) (melamine peak; melamine absorption intensity; melamine intensity) [melamine/ester peak ratio (intensity ratio of melamine to ester)] of 0.4 or less (for example, 0 to 0.4), preferably 0.3 or less (for example, 0 to 0.3), and more preferably 0.2 or less (for example, 0 to 0.2), as determined through attenuated total reflectance measurement (ATR) using Fourier transform infrared spectroscopy (FT-IR). In this connection, acrylic/melamine coatings have large melamine/ester peak ratios, because they have undergone crosslinking with melamine. In contrast, acid-rain resistant coatings have small melamine/ester peak ratios, because they have not undergone crosslinking with melamine.

Specifically, the melamine/ester peak ratio is determined through ATR using FT-IR, in which the melamine peak is defined as the height of the top of the peak at 814 $cm^{-1}$ from a base line as a line passing 725 $cm^{-1}$ to 825 $cm^{-1}$; the ester peak is defined as the height of the top of the peak at 1730 $cm^{-1}$ from a base line as a line passing 1660 $cm^{-1}$ to 1780 $cm^{-1}$, and the melamine/ester peak ratio is calculated from the obtained melamine peak and ester peak according to the following equation:

(Melamine/Ester peak ratio)=(Melamine peak)/(Ester peak)

Further, the acrylic pressure-sensitive adhesive sheet of the invention exhibits good adhesiveness to low polarity polyolefin resin such as polyethylene or polypropylene, as described above.

Further, the acrylic pressure-sensitive adhesive sheet of the invention has the pressure-sensitive adhesive layer (Y) having suitable cohesive force and stress relaxation, and has the viscoelastic material layer (X) as a foam layer which exhibits good thickness unevenness absorbability and good stress dispersibility, so that repelling resistance is excellent.

The acrylic pressure-sensitive adhesive sheet of the invention, irrespective of the polarity of adherends, has an excellent pressure-sensitive adhesiveness, particularly adhesiveness, and good properties in both repelling resistance and holding property, with reference to low polarity adherends or high polarity adherends. The acrylic pressure-sensitive adhesive sheet of the invention may' be used for adhesion to automotive coating, protection of automotive coating surface, affixation to household appliances (for example, affixation of polypropylene material with ABS material), affixation to housing facility equipment, and the like.

## EXAMPLES

The present invention will be illustrated in further detail based on examples below, but these examples are not to be construed as limiting the scope of the present invention.

### Example 1

Production of viscoelastic material layer

To a monomer mixture of 90 parts by weight of 2-ethylhexyl acrylate and 10 parts by weight of acrylic acid (AA) as a monomer component, were mixed 0.05 parts by weight of 2,2-dimethoxy-1,2-diphenylethan-1-one as a photopolymerization initiator (trade name "Irgacure 651" by Ciba Japan K.K.) and 0.05 parts by weight of 1-hydroxy-cyclohexyl-phenylketone (trade name "Irgacure 184" by Ciba Japan K.K.), followed by irradiating an ultraviolet ray to a viscosity (BH type viscometer, No. 5 rotor, 10 rpm, measured at a temperature of 30˚C.) of 15 Pa·s, thereby preparing a partially polymerized composition (syrup A).

To 100 parts by weight of the syrup A was added 0.1 parts by weight of 1,6-hexanediol diacrylate (HDDA), followed by further adding hollow glass balloons (trade name "CEL-STAR Z-27" by Tokai Kogyo Co., Ltd.) to an amount of 30% by volume based on the total volume of the syrup. To the syrup containing the hollow glass balloons was added 1.0 part by weight of a fluorine surfactant (made by AGC Seimi Chemical Co., Ltd.; an acrylic copolymer having polyoxyethylene groups and fluorinated hydrocarbon groups in side chain and having a weight-average molecular weight Mw of 8300) to be mixed homogeneously, thereby preparing a precursor for pressure-sensitive adhesive. The precursor had a content of hollow glass balloons of about 23% by volume based on the total volume of the precursor for pressure-sensitive adhesive.

A nitrogen gas was introduced into the precursor for pressure-sensitive adhesive, followed by being mixed with cells. A

nitrogen gas was introduced using a device that includes a stator having a multiplicity of fine teeth arranged on a disc having a through hole at the center part, and a rotor facing the stator and having fine teeth, similarly to the stator arranged on the disc. The cells were mixed to about 15% by volume to the total volume of the ejected liquid, followed by obtaining a cell-mixed pressure-sensitive adhesive composition.
The cell-mixed pressure-sensitive adhesive composition was introduced onto a roll coater for wet lamination through a tube (diameter: 19 mm, length: approximately 1.5 m), a dried and cured layer is applied between release-treated surfaces of two sheets of the release liners which are different from the releasing force, so that the layer has a thickness of 1.0mm. Incidentally, the release liners were trade name "MRF38" made by Mitsubishi Polyester Film GmbH (a release liner made from polyethylene terephthalate where one face had been subjected to release treatment on one side, thickness: 38μm); and trade name "MRN38" by Mitsubishi Polyester Film GmbH (a release liner made from polyethylene terephthalate where one face had been subjected to release treatment on one side, thickness: 38μm), respectively. That is, a cell-mixed pressure-sensitive adhesive composition is disposed between the release liners. Then, an ultraviolet ray was irradiated at an illuminance of 5 mW/$cm^2$ to both faces of the sheet for 3 minutes to cure the layer of a cell-mixed pressure-sensitive adhesive composition to prepare the viscoelastic material layer sheet of a release liner/viscoelastic material layer of a cell-mixed pressure-sensitive adhesive/release liner.

Production of pressure-sensitive adhesive layer

To 100 parts by weight of a monomer composition including 70 parts by weight of 2-ethylhexyl acrylate (2EHA, Tg of homopolymer: -70°C), 26 parts by weight of N-vinyl-2-pyrrolidone (NVP, Tg of homopolymer: 54°C), and 4 parts by weight of hydroxyethyl acrylamide (HEAA, Tg of homopolymer: 98°C) were mixed 0.05 parts by weight of 2,2-dimethoxy-1,2-diphenylethan-1-one (trade name "Irgacure 651" by Ciba Japan K.K.) and 0.05 parts by weight of 1-hydroxy-cyclohexyl-phenylketone (trade name "Irgacure 184" by Ciba Japan K.K.) as a photopolymerization initiator, followed by sufficiently replacing the atmosphere with nitrogen gas, photopolymerizing the composition by exposure to ultraviolet rays under the atmosphere of nitrogen, thereby obtaining a partially polymerized product of about 11% by weight conversion (monomer syrup, syrup type composition).
To the partially polymerized product was added 0.01 parts by weight of 1,6-hexanediol diacrylate (HDDA), 0.05 parts by weight of 2,2-dimethoxy-1,2-diphenylethan-1-one (trade name "Irgacure 651" by Ciba Japan K.K.) and 0.05 parts by weight of 1-hydroxy-cyclohexyl-phenylketone (trade name "Irgacure 184" by Ciba Japan K.K.) as a photopolymerization initiator. The resultant composition was applied on the release-treated face of the release liner [polyester film (trade name "MRN38" by Mitsubishi Polyester Film GmbH), of which one face had been release-treated with silicone release agent] so as to form a pressure-sensitive adhesive layer of 50μm on the last thickness.
Subsequently, the polyester film (trade name, "MRN 38" by Mitsubishi Polyester Film GmbH) of which one face had been release-treated by a silicone releasing agent was affixed on the coated layer such that a release-treated face thereof contacted a coated layer, an ultraviolet ray was irradiated under conditions of illuminance of 4 mW/$cm^2$, and a quantity of light of 720mJ/$cm^2$, to prepare the pressure sensitive adhesive layer sheet of a release liner/pressure-sensitive adhesive layer/release liner.
The gel fraction of the pressure-sensitive adhesive layer was 63.2% by weight.
The release liner was peeled from one side of the viscoelastic material layer sheet to expose the viscoelastic material layer, and a release liner was peeled from one side of the pressure-sensitive adhesive layer sheet to expose the pressure-sensitive adhesive layer, followed by affixing so as to contact the viscoelastic material layer sheet and the pressure-sensitive adhesive layer sheet with the viscoelastic material layer and the pressure-sensitive adhesive layer thereby producing an acrylic pressure-sensitive adhesive sheet.

Example 2

Production of pressure-sensitive adhesive layer

The pressure-sensitive adhesive layer sheet of a release liner/pressure-sensitive adhesive layer/release liner was obtained by the same method as Example 1, except that: 0.05 parts by weight of 2,2-dimethoxy-1,2-diphenylethan-1-one (trade name "Irgacure 651" by Ciba Japan K.K.) and 0.05 parts by weight of 1-hydroxy-cyclohexyl-phenylketone (trade name "Irgacure 184" by Ciba Japan K.K.) as a photopolymerization initiator were added to 100 parts by weight of a monomer composition including 70 parts by weight of 2-ethylhexyl acrylate (2EHA, Tg of homopolymer: -70°C), 26 parts by weight of N-diethylacrylamide (DEAA, Tg of homopolymer: 81°C), and 4 parts by weight of hydroxyethyl acrylamide (HEAA, Tg of homopolymer: 98°C), followed by sufficiently replacing the atmosphere with nitrogen gas, photopolymerizing the composition by exposure to ultraviolet rays under the atmosphere of nitrogen, thereby obtaining a partially polymerized composition of about 11% by weight conversion (monomer syrup, syrup type composition); and 0.05 parts by weight of 1,6-hexanediol diacrylate (HDDA) was added to the partially polymerized composition.

Further, the gel fraction of the pressure-sensitive adhesive layer was 41.8% by weight.

Further, an acrylic pressure-sensitive adhesive sheet was produced by the same method as Example 1, except for using the pressure-sensitive adhesive layer sheet of a release liner/pressure-sensitive adhesive layer/release liner.

Example 3

Production of pressure-sensitive adhesive layer

To a reaction vessel equipped with a cooling tube, an inlet for nitrogen gas, a thermometer, a dropping funnel, and a stirring blade, was added 0.2 parts by weight of 2,2-azobisisobutyronitrile (AIBN) as a polymerization initiator, 70 parts by weight of 2-ethylhexyl acrylate (2EHA, Tg of homopolymer: -70˚C), 26 parts by weight of N-vinyl-2-pyrrolidone (NVP, Tg of homopolymer: 54˚C), 4 parts by weight of hydroxyethyl acrylamide (HEAA, Tg of homopolymer: 98˚C) as a monomer component, and 122.5 parts by weight of ethyl acetate as a solvent, followed by stirring under an atmosphere of nitrogen gas at room temperature for 1 hour. Subsequently, the content (a solution containing the total amount of the monomer components) was heated to 60˚C and was polymerized under nitrogen gas flow in the reaction vessel for 5.5 hours, followed by raising the temperature to 70˚C to be further polymerized for 2 hours. An acrylic polymer solution was obtained by such batch solution polymerization.

To the obtained acrylic polymer solution, was added 0.2 parts by weight (based on solid content) of isocyanate crosslinking agent (reaction product of trimethylol propane and tolylene diisocyanate, trade name "Coronet L" made by Nippon polyurethane Industry Co., Ltd., C/L), to obtain a pressure-sensitive adhesive composition.

The pressure-sensitive adhesive composition was applied on the release face (release-treated face) of the release liner [poly(ethylene terephthalate) base (supplied under the trade name "MRF38" by Mitsubishi Polyester Film GmbH, thickness: 38μm), one face of which had been subjected to release treatment] with an applicator, was dried at 100˚C for 2 minutes, and formed a pressure-sensitive adhesive layer of thickness of 50μm on the release liner. The separate release liner was affixed such that a release face thereof contacts a pressure-sensitive adhesive layer on the pressure-sensitive adhesive layer, so that the pressure-sensitive adhesive layer sheet of the release liner/pressure-sensitive adhesive layer/release liner was produced.

Further, the gel fraction of the pressure-sensitive adhesive layer was 50.2% by weight.

Further, an acrylic pressure-sensitive adhesive sheet was produced by the same method as Example 1, except for using the pressure-sensitive adhesive layer sheet of a release liner/pressure-sensitive adhesive layer/release liner.

Example 4

Production of pressure-sensitive adhesive layer

The pressure-sensitive adhesive layer sheet of a release liner/pressure-sensitive adhesive layer/release liner was obtained by the same method as Example 1, except that: 0.05 parts by weight of 2,2-dimethoxy-1,2-diphenylethan-1-one (trade name "Irgacure 651" by Ciba Japan K.K.) and 0.05 parts by weight of 1-hydroxy-cyclohexyl-phenylketone (trade name "Irgacure 184" by Ciba Japan K.K.) as a photopolymerization initiator were mixed to 100 parts by weight of a monomer composition including 70 parts by weight of 2-ethylhexyl acrylate (2EHA, Tg of homopolymer: -70˚C), 26 parts by weight of N-vinyl-2-pyrrolidone (NVP, Tg of homopolymer: 54˚C), and 4 parts by weight of N-methylol acrylamide (N-MAM, Tg of homopolymer: 165˚C), followed by sufficiently replacing the atmosphere with nitrogen gas, photopolymerizing the composition by exposure to ultraviolet rays under the atmosphere of nitrogen thereby obtaining a partially polymerized composition of about 11% by weight conversion (monomer syrup, syrup type composition); and 0.03 parts by weight of 1,6-hexanediol diacrylate (HDDA) was added to the partially polymerized composition.

Further, the gel fraction of the pressure-sensitive adhesive layer was 69.0% by weight.

Further an acrylic pressure-sensitive adhesive sheet was produced by the same method as Example I, except for using the pressure-sensitive adhesive layer sheet of a release liner/pressure-sensitive adhesive layer/release liner.

Example 5

Production of pressure-sensitive adhesive layer

The pressure-sensitive adhesive layer sheet of a release liner/pressure-sensitive adhesive layer/release liner was obtained by the same method as Example 1, except that: 0.05 parts by weight of 2,2-dimethoxy-1,2-diphenylethan-1-one (trade name "Irgacure 651" by Ciba Japan K.K.) and 0.05 parts by weight of 1-hydroxy-cyclohexyl-phenylketone (trade name "Irgacure 184" by Ciba Japan K.K.) as a photopolymerization initiator were mixed to 100 parts by weight of a monomer composition including 70 parts by weight of 2-ethylhexyl acrylate (2EHA, Tg of homopolymer: -70˚C), 11

parts by weight of N,N-diethyl acrylamide (DEAA, Tg of homopolymer: 81°C), 15 parts by weight of N-vinyl-2-pyrrolidone (NVP, Tg of homopolymer: 54°C), 5 parts by weight of N-methylol acrylamide (N-MAM, Tg of homopolymer: 165°C), followed by sufficiently replacing the atmosphere with nitrogen gas, photopolymerizing the composition by exposure to ultraviolet rays under the atmosphere of nitrogen, thereby obtaining a partially polymerized composition of about 11% by weight conversion (monomer syrup, syrup type composition); and 0.03 parts by weight of 1,6-hexanediol diacrylate (HDDA) was added to the partially polymerized composition.
Further, the gel fraction of the pressure-sensitive adhesive layer was 63.0% by weight.

Further, an acrylic pressure-sensitive adhesive sheet was produced by the same method as Example 1, except for using the pressure-sensitive adhesive layer sheet of a release liner/pressure-sensitive adhesive layer/release liner.

Example 6

Production of pressure-sensitive adhesive layer

To a reaction vessel equipped with a cooling tube, an inlet for nitrogen gas, a thermometer, a dropping funnel, and a stirring blade, was added 0.2 parts by weight of 2,2-azobisisobutyronitrile (AIBN) as a polymerization initiator, 70 parts by weight of 2-ethylhexyl acrylate (2EHA, Tg of homopolymer: -70°C), 26 parts by weight of N-vinyl-2-pyrrolidone (NVP, Tg of homopolymer: 54°C), 4 parts by weight of N-methylol acrylamide (N-MAM, Tg of homopolymer: 165°C) as a monomer component, and 122.5 parts by weight of ethyl acetate as a solvent, followed by stirring under an atmosphere of nitrogen gas at room temperature for 1 hour. Subsequently, the content (a solution containing the total amount of the monomer components) was heated to 60°C and was polymerized under nitrogen gas flow for 5.5 hours in the reaction vessel, followed by raising the temperature to 70°C to be further polymerized for 2 hours. An acrylic polymer solution was obtained by such batch solution polymerization.
To the obtained acrylic polymer solution, was added 0.4 parts by weight (based on solid content) of isocyanate crosslinking agent (reaction product of trimethylol propane and tolylene diisocyanate, trade name "Coronet L" made by Nippon Polyurethane Industry Co., Ltd., C/L), to obtain a pressure-sensitive adhesive composition.
The pressure-sensitive adhesive composition was applied on the release face (release-treated face) of the release liner [poly(ethylene terephthalate) base (supplied under the trade name "MRF38" by Mitsubishi Polyester Film GmbH, thickness: 38μm), one face of which had been subjected to release treatment] with an applicator, was dried at 100°C for 2 minutes, and formed a pressure-sensitive adhesive layer of thickness of 50μm on the release liner. The separate release liner was affixed such that a release face thereof contacts a pressure-sensitive adhesive layer on the pressure-sensitive adhesive layer, so that the pressure-sensitive adhesive layer sheet of the release liner/pressure-sensitive adhesive layer/release liner was produced.
Further, the gel fraction of the pressure-sensitive adhesive layer was 48.2% by weight.

Further, an acrylic pressure-sensitive adhesive sheet was produced by the same method as Example 1, except for using the pressure-sensitive adhesive layer sheet of the release liner/pressure-sensitive adhesive layer/release liner.

Example 7

Production of pressure-sensitive adhesive layer

The pressure-sensitive adhesive layer sheet of a release liner/pressure-sensitive adhesive layer/release liner was obtained by the same method as Example 1, except that: 0.05 parts by weight of 2,2-dimethoxy-1,2-diphenylethan-1-one (trade name "Irgacure 651" by Ciba Japan K.K.) and 0.05 parts by weight of 1-hydroxy-cyclohexyl-phenylketone (trade name "Irgacure 184" by Ciba Japan K.K.) as a photopolymerization initiator were mixed to 100 parts by weight of a monomer composition including 78 parts by weight of butyl acrylate (BA, Tg of homopolymer: -55°C), 13 parts by weight of N-vinyl-2-pyrrolidone (NVP, Tg of homopolymer: 54°C), 9 parts by weight of N-methylol acrylamide (N-MAM, Tg of homopolymer: 165°C), followed by sufficiently replacing the atmosphere with nitrogen gas, photopolymerizing the composition by exposure to ultraviolet rays under the atmosphere of nitrogen, thereby obtaining a partially polymerized composition of about 11% by weight conversion (monomer syrup, syrup type composition).
Further, the gel fraction of the pressure-sensitive adhesive layer was 28.7% by weight.

Further, an acrylic pressure-sensitive adhesive sheet was produced by the same method as Example 1, except for using the pressure-sensitive adhesive layer sheet of the release liner/pressure-sensitive adhesive layer/release liner.

Comparative Example 1

Production of pressure-sensitive adhesive layer sheet

The pressure-sensitive adhesive layer sheet of a release liner/pressure-sensitive adhesive layer/release liner was obtained by the same method as Example 1, except that: 0.05 parts by weight of 2,2-dimethoxy-1,2-diphenylethan-1-one (trade name "Irgacure 651" made by Ciba Japan K.K.) and 0.05 parts by weight of 1-hydroxy-cyclohexyl-phenylketone (trade name "Irgacure 184" made by Ciba Japan K.K.) as a photopolymerization initiator were mixed to 100 parts by weight of monomer composition including 90 parts by weight of 2-ethyl hexyl acrylate (2EHA, Tg of homopolymer: -70˚C) and 10 parts by weight of acrylic acid (AA, Tg of homopolymer: 106˚C), followed by sufficiently replacing the atmosphere with nitrogen gas, photopolymerizing the composition by exposure to ultraviolet rays under the atmosphere of nitrogen, thereby obtaining a partially polymerized composition of about 8% by weight conversion (monomer syrup, syrup type composition); and 0.04 parts by weight of 1,6-hexanediol diacrylate (HDDA) was added to the partially polymerized composition.
Further, the gel fraction of the pressure-sensitive adhesive layer was 60.6% by weight.
Further, an acrylic pressure-sensitive adhesive sheet was produced by the same method as Example 1, except for using the pressure-sensitive adhesive layer sheet of the release liner/pressure-sensitive adhesive layer/release liner.

Comparative Example 2

Production of pressure-sensitive adhesive layer sheet

The pressure-sensitive adhesive layer sheet of a release liner/pressure-sensitive adhesive layer/release liner was obtained by the same method as Example 1, except that: 0.05 parts by weight of 2,2-dimethoxy-1,2-diphenylethan-1-one (trade name "Irgacure 651" made by Ciba Japan K.K.) and 0.05 parts by weight of 1-hydroxy-cyclohexyl-phenylketone (trade name "Irgacure 184" made by Ciba Japan K.K.) as a photopolymerization initiator were mixed to 100 parts by weight of monomer composition including 70 parts by weight of 2-ethyl hexyl acrylate (2EHA, Tg of homopolymer: -70˚C) and 30 parts by weight of N,N-diethyl acrylamide (DEAA, Tg of homopolymer: 81 ˚C), followed by sufficiently replacing the atmosphere with nitrogen gas, photopolymerizing the composition by exposure to ultraviolet rays under the atmosphere of nitrogen, thereby obtaining a partially polymerized composition of about 11% by weight conversion (monomer syrup, syrup type composition); and 0.08 parts by weight of 1,6-hexanediol diacrylate (HDDA) was added to the partially polymerized composition.
Further, the gel fraction of the pressure-sensitive adhesive layer was 49.0% by weight.
Further, an acrylic pressure-sensitive adhesive sheet was produced by the same method as Example 1, except for using the pressure-sensitive adhesive layer sheet of the release liner/pressure-sensitive adhesive layer/release liner.

Comparative Example 3

Production of pressure-sensitive adhesive layer sheet

The pressure-sensitive adhesive layer sheet of a release liner/pressure-sensitive adhesive layer/release liner was obtained by the same method as Example 1, except that: 0.05 parts by weight of 2,2-dimethoxy-1,2-diphenylethan-1-one (trade name "Irgacure 651" made by Ciba Japan K.K.) and 0.05 parts by weight of 1-hydroxy-cyclohexyl-phenylketone (trade name "Irgacure 184" made by Ciba Japan K.K.) as a photopolymerization initiator were mixed to 100 parts by weight of a monomer composition including 70 parts by weight of 2-ethyl hexyl acrylate (2EHA, Tg of homopolymer: -70˚C) and 30 parts by weight of N,N-dimethyl acrylamide (DMAA, Tg of homopolymer: 119˚C), followed by sufficiently replacing the atmosphere with nitrogen gas, photopolymerizing the composition by exposure to ultraviolet rays under the atmosphere of nitrogen, thereby obtaining a partially polymerized composition of about 11% by weight conversion (monomer syrup, syrup type composition); and 0.08 parts by weight of 1,6-hexanediol diacrylate (HDDA) was added to the partially polymerized composition was added.
Further, the gel fraction of the pressure-sensitive adhesive layer was 79.2% by weight.
Further, an acrylic pressure-sensitive adhesive sheet was produced by the same method as Example 1, except for using the pressure-sensitive adhesive layer sheet of the release liner/pressure-sensitive adhesive layer/release liner.

Comparative Example 4

Production of pressure-sensitive adhesive layer

To a reaction vessel equipped with a cooling tube, an inlet for nitrogen gas, a thermometer, a dropping funnel, and a stirring blade, was added 0.2 parts by weight of 2,2-azobisisobutyronitrile (AIBN) as a polymerization initiator, 70 parts by weight of 2-ethylhexyl acrylate (2EHA, Tg of homopolymer: -70˚C), 30 parts by weight ofN-vinyl-2-pyrrolidone (NVP, Tg of homopolymer: 54˚C), 1 part by weight of hydroxybutyl acrylate (HBA) as a monomer component, and 123.5 parts by weight of ethyl acetate as a solvent, followed by stirring under an atmosphere of nitrogen gas at room temperature for 1 hour. Subsequently, the content (a solution containing the total amount of the monomer components) was heated to 60˚C and was polymerized under nitrogen gas flow for 5.5 hours in the reaction vessel, followed by raising the temperature to 70˚C to be further polymerized for 2 hours. An acrylic polymer solution was obtained by such batch solution polymerization.

To the obtained acrylic polymer solution, was added 0.5 parts by weight (based on solid content) of isocyanate crosslinking agent (reaction product of trimethylol propane and tolylene diisocyanate, trade name "Coronet L" made by Nippon Polyurethane Industry Co., Ltd., C/L), to obtain a pressure-sensitive adhesive composition.

Subsequently, the pressure-sensitive adhesive layer sheet of a release liner/pressure-sensitive adhesive layer/release liner was obtained by the same method as Example 3.

Further, the gel fraction of the pressure-sensitive adhesive layer was 62.6% by weight.

Further, an acrylic pressure-sensitive adhesive sheet was produced by the same method as Example 1, except for using the pressure-sensitive adhesive layer sheet of the release liner/pressure-sensitive adhesive layer/release liner.

Evaluation

With reference to Examples and comparative examples, adhesive force, repelling resistance and holding property were measured or evaluated. The results are shown in Table 1.

Adhesive Force

The release film was peeled from the viscoelastic material layer of the acrylic pressure-sensitive adhesive sheets obtained in Examples and Comparative Example, and a polyethylene terephthalate film which was not subjected to release treatment and which had a thickness of 50μm was affixed to the viscoelastic material layer surface. This sheet was cut into a width of 25mm to obtain a sample for measuring. The release film affixed to the pressure-sensitive adhesive layer surface was peeled, and the pressure-sensitive adhesive layer surface was affixed to a clean adherend which was reciprocally rubbed and washed ten times using a clean waste soaked with isopropyl alcohol, by compression bonding due to one-way moving of a 5-kg roller thereon. After storing it at 40˚C for 2 days, it was left for 30 minutes under the condition of 23˚C×50%RH, and a peeling strength [N/25mm] was measured using a tension tester ("TCM-1kNB", made by Minebea Co., Ltd.) under the condition of a tension rate of 50mm/minute, and a peeling angle of 180˚. A mountain-valley type adhesive curve was drawn by values observed in measuring, and therefore the average value of mountain portion was regarded as the observed value of adhesiveness force.

The used adherends included an ABS plate ("Kobe sheet ABS plate", Shin-Kobe Electric Machinery Co., Ltd.), a PP plate (polypropylene plate) ("Kobe sheet polypropylene plate", Shin-Kobe Electric Machinery Co., Ltd.), a PC plate (polycarbonate plate), and a plate ("acid-rain resistant plate for automotive", made by Kansai Paint Co., Ltd., melamine peak/ester peak ratio is 0.03) where acid-rain resistant coatings for automotive are formed.

Repelling resistance

An acrylic pressure-sensitive adhesive sheet obtained in Examples and Comparative Examples was cut into a size of a width of 10mm and a length of 90mm, the release film was peeled from the viscoelastic material layer (X), and an aluminum plate (thickness of 0.5mm) of the same size was affixed to the viscoelastic material layer surface to produce a test piece. The test piece was bent along a cord having the diameter of 50 mm (that is, a curvature of R50) in the longitudinal direction with the aluminum plate disposed inside and with pressure-sensitive adhesive layer disposed outside. Then, the release film was peeled from the pressure-sensitive adhesive layer. The pressure-sensitive adhesive layer surface was affixed to a clean adherend which was reciprocally rubbed and washed ten times using a clean waste soaked with isopropyl alcohol, by compression bonding due to a laminator so as not to float from the adherend. This was left at room temperature for 24 hours, the height (floating height) where the edges of test piece in the longitudinal direction were floated from the adherend was measured, and the repelling resistance was evaluated with the following evaluation criteria.

Both edges of the test piece were measured, and the sum of the floating height at both edges was taken as the value of repelling resistance.
The used adherends include PP plate (polypropylene plate) ("Kobe sheet polypropylene plate", Shin-Kobe Electric Machinery Co., Ltd.)

Evaluation criteria

Very good (◎): the value of repelling resistance (the sum of floating height at both edges) is 5mm or less
Good (○): the value of repelling resistance (the sum of floating height at both edges) is within the range of more than 5 mm and 10 mm or less
Poor (X): the value of repelling resistance (the sum of floating height at both edges) is more than 10 mm

Further, when the value of the repelling resistance is more than 10 mm, the acrylic pressure-sensitive adhesive sheet cannot exhibit the repelling resistance.

Holding property

In an acrylic pressure-sensitive adhesive sheet obtained in Examples and Comparative Examples, the release film was peeled from the viscoelastic material layer, a polyethylene terephthalate film which was not subjected to release treatment and which had a thickness of 50μm was affixed to the viscoelastic material layer surface. This sheet was cut into a size of a width of 10mm and a length of 100mm, so that a test piece was produced. Then, the release film was peeled from the pressure-sensitive adhesive layer. The pressure-sensitive adhesive layer surface was affixed to the surface of a clean Bakelite plate (width of 25mm, length of 50mm) which was reciprocally rubbed and washed ten times using a clean waste soaked with isopropyl alcohol, under the conditions where the adhesive area was a size of width of 10mm and length of 20mm, and a part of the test piece was protruded, by reciprocally moving one time with a 2-kg roller thereon. After storing it at 60˚C for 30 minutes, the Bakelite plate was taken down under conditions of 60˚C, and the properties thereof were determined by the mismatch distance in the vertical direction of the test piece while applying a load of 500g to a free edge (parts protruded from the Bakelite plate) of the test pieces. When the test piece dropped from the Bakelite before the passing of 2 hours thereafter, it was evaluated as poor (X), and when the test piece remained on the Bakelite plate even after 2 hours, it was evaluated as good (○).
Table 1

| | Pressure-sensitive adhesive layer composition | | | | | | | Gel fraction pressure-sensitive adhesive layer [% by weight] | adhesive force [N/25mm] | | | | Repelling resistance | Holding Property |
|---|---|---|---|---|---|---|---|---|---|---|---|---|---|---|
| | Blending system (polymerization method) | Monomer component (weight ratio) | | | | Crosslinking component | | | ABS | PP | PC | Acid-rain resistant plate for automotive | | |
| | | m1 | m2 | m3 | m4 | Kind | Added amount [parts by weight] | | | | | | | |
| Ex.1 | 2EHA/NVP/ HEAA=70/26/4 (photopolymerization) | 70 | 4 | 26 | | HDDA | 0.01 | 63.2 | 68.5 * | 25.6 | 68.1 * | 68.8 * | 3.5 (◎) | ○ |
| Ex.2 | 2EHA/DEAA/ HEAA=70/26/4 (photopoiymerization) | 70 | 4 | 26 | | HDDA | 0.05 | 41.8 | 65.9 * | 21.8 | 39.6 | 49.1 | 3.0 (◎) | ○ |
| Ex.3 | 2EHA/ NVPMEAA=70/26/4 (solution polymerization) | 70 | 4 | 26 | | C/L | 0.2 | 50.2 | 70.2 * | 32.9 | 71.0 * | 70.2 * | 1.0 (◎) | ○ |
| E x.4 | 2EHA/NVP/N-MAN=70/26/4 (photopolymerization) | 70 | 4 | 26 | | HDDA | 0.03 | 69.0 | 69.0 * | 25.0 | 66.0 * | 63.5 * | 5.3 (○) | ○ |
| Ex.5 | 2EHA/DEAA/NVP/H-MAN= 70/11/15/5 (photopolymerization) | 70 | 5 | 26 | | HDDA | 0.03 | 63.0 | 63 * | 28.0 | 59.0 * | 60.8 | 6.8 (○) | ○ |
| Ex.6 | 2EHA/NVP/N-MAN=70/26/4 (solution polymerization) | 70 | 4 | 26 | | C/L | 0.4 | 48.2 | 64.3 * | 24.5 | 68.0 * | 66.0 * | 0 (◎) | ○ |
| Ex.7 | BA/NVP/HEAA=78/13/9 (photopolymerization) | 78 | 9 | 13 | | HDDA | 0.01 | 28.7 | 66.4 * | 18.9 | 67.6 | 65.4 | 6.0 (○) | ○ |
| Comp. Ex.1 | 2EHA/AA=90/10 (photopolymerization) | 90 | | | 10 | HDDA | 0.04 | 60.6 | 38.5 | 17.7 | 39.0 | 37.2 | 7.5 (○) | ○ |
| Comp. Ex.2 | 2EHA/DEAA=70/30 (photopolymerization) | 70 | | 30 | | HDDA | 0.08 | 49 | 66.9 * | 15.0 | 39.0 | 68.7 * | 11 (X) | X |

(continued)

| | Pressure-sensitive adhesive layer composition | | | | | | | Gel fraction pressure-sensitive adhesive layer [% by weight] | adhesive force [N/25mm] | | | | Repelling resistance | Holding Property |
|---|---|---|---|---|---|---|---|---|---|---|---|---|---|---|
| | Blending system (polymerization method) | Monomer component (weight ratio) | | | | Crosslinking component | | | ABS | PP | PC | Acid-rain resistant plate for automotive | | |
| | | m1 | m2 | m3 | m4 | Kind | Added amount [parts by weight] | | | | | | | |
| Comp. Ex.3 | 2EHA/DMAA=70/30 (photopolymerization) | 70 | | 30 | | HDDA | 0.08 | 79.2 | 66.0 * | 15.0 | 40.0 | 51.0 | 25 (X) | ○ |
| Comp. Ex. 4 | 2EHA/NVP/HBA=70/30/I (solution polymerization) | 70 | | 30 | 1 | C/L | 0.5 | 62.6 | 69.9 * | 35.1 | 68.8 * | 70.0 * | 5.5 (○) | ○ |

In table 1, "*" represents cohesive failure during measuring. In table 1, "ABS" represents "ABS plate", "PP" represents "polypropylene plate" and "PC" represents "polycarbonate plate"

Examples 1 and 2 were good regarding the balance of adhesive force (peeling), repelling resistance (repellency), and holding property. Further, holding property was improved by blending hydroxyethyl acrylamide (HEAA).
Comparative Example 1 had a carboxyl group owing to using acrylic acid, and hence had low repellency, and further had low peeling to low polarity adherends such as the PP plate, ABS plate, and acid-rain resistant plate for automotive. Further, Comparative Examples 2 and 3 had high peeling, but were not good in repellency.
Example 3 was excellent in peeling property, repellency, and holding property, and was good in repelling resistance in comparison with Comparative Example 4.
That is, Examples of solution polymerization and photopolymerization types can be compatible with both adhesive force and repelling resistance respectively. However, Comparative Examples cannot be compatible with both adhesive force and repelling resistance.

While the invention has been described in detail with reference to specific embodiments thereof, it will be apparent to one skilled in the art that various changes and modifications can be made therein without departing from the spirit and scope thereof.
Incidentally, the present application is based on Japanese Patent Application No. 2009-058703 filed on March 11, 2009, and the contents are incorporated herein by reference.
Also, all the references cited herein are incorporated as a whole.

According to the acrylic pressure-sensitive adhesive sheet of the invention, since the sheet has the above construction, it is possible to obtain the sheet having good pressure-sensitive adhesiveness, particularly adhesiveness, and good properties in both repelling resistance and holding property. Particularly, it is possible to obtain the sheet having a good pressure-sensitive adhesiveness, particularly adhesiveness, and good properties in both repelling resistance and holding property to low polarity adherends such as automotive coatings having low polarity and plastics having low polarity.

## Claims

1. An acrylic pressure-sensitive adhesive sheet comprising:

    a viscoelastic material layer (X) containing hollow microspheres; and
    a pressure-sensitive adhesive layer (Y) provided on at least one face of the viscoelastic material layer (X) and formed from a monomer composition,

    wherein said monomer composition includes the following monomers (ml), (m2) and (m3) as essential monomer components, in which a content of the monomer (m1) is 50 to 85% by weight, a content of the monomer (m2) is 0.1 to 20% by weight, and a content of the monomer (m3) is 2 to 40% by weight, based on a total amount of monomer components constituting the monomer composition,

    (m1) an alkyl(meth)acrylate monomer including an alkyl group having 1 to 20 carbon atoms, which is represented by the following formula (1),

    [Chem. 1]

    $$CH_2=C(R^1)COOR^2 \quad (1)$$

    wherein $R^1$ represents a hydrogen atom or a methyl group, and $R^2$ represents an alkyl group having 1 to 20 carbon atoms,
    (m2) an N-hydroxyalkyl(meth)acrylamide monomer having a hydroxyalkyl group having 1 to 4 carbon atoms, which is represented by the following formula (2),

    [Chem. 2]

    $$CH_2=C(R^3)CONHR^4 \quad (2)$$

wherein $R^3$ represents a hydrogen atom or a methyl group, and $R^4$ represents a hydroxyalkyl group having 1 to 4 carbon atoms,

(m3) a vinyl monomer having a nitrogen atom in a backbone thereof, except for the monomer (m2).

**2.** The acrylic pressure-sensitive adhesive sheet according to claim 1, wherein the monomer (m3) vinyl monomer having a nitrogen atom in a backbone thereof is at least one kind of monomer selected from N-vinyl cyclic amides represented by the following formula (3) and (meth)acrylamides:

[Chem. 3]

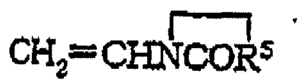

(3)

wherein $R^5$ represents a divalent organic group.

**3.** The acrylic pressure-sensitive adhesive sheet according to claim 1 or 2, wherein a total content of the monomers (m1), (m2), and (m3) in the monomer composition is 80% by weight or more based on the total amount of the monomer components constituting the monomer composition.

**4.** The acrylic pressure-sensitive adhesive sheet according to any one of claims 1 to 3, wherein an acrylic copolymer obtained by polymerizing the monomer components constituting the monomer composition has a glass transition temperature (Tg) of -10˚C or less.

**5.** A method for producing an acrylic pressure-sensitive adhesive sheet, said method comprising forming the acrylic pressure-sensitive adhesive sheet having a pressure-sensitive adhesive layer (Y) on at least one face of a viscoelastic material layer (X) containing hollow microspheres, through steps of:

(i) preparing an acrylic pressure-sensitive adhesive composition comprising: a monomer composition or a partially polymerized composition thereof, including the following monomers (m1), (m2) and (m3) as essential monomer components, in which a content of the monomer (m1) is 50 to 85% by weight, a content of the monomer (m2) is 0.1 to 20% by weight, and a content of the monomer (m3) is 2 to 40% by weight, based on a total amount of monomer components constituting the monomer composition; and 0.01 to 2 parts by weight of a photopolymerization initiator based on 100 parts by weight of the monomer components;

(ii) applying the acrylic pressure-sensitive adhesive composition prepared in the step (i) on a support; and

(iii) curing the acrylic pressure-sensitive adhesive composition by irradiating an active energy ray to the acrylic pressure-sensitive adhesive composition applied on the support, thereby forming the pressure-sensitive adhesive layer (Y),

(ml) an alkyl(meth)acrylate monomer including an alkyl group having 1 to 20 carbon atoms, which is represented by the following formula (1),

[Chem. 4]

$$CH_2=C(R^1)COOR^2 \qquad (1)$$

wherein $R^1$ represents a hydrogen atom or a methyl group, and $R^2$ represents an alkyl group having 1 to 20 carbon atoms,

(m2) an N-hydroxyalkyl(meth)acrylamide monomer having a hydroxyalkyl group having 1 to 4 carbon atoms, which is represented by the following formula (2),

[Chem. 5]

$$CH_2=C(R^3)CONHR^4 \qquad (2)$$

wherein $R^3$ represents a hydrogen atom or a methyl group, and $R^4$ represents a hydroxyalkyl group having 1 to 4 carbon atoms,
(m3) a vinyl monomer having a nitrogen atom in a backbone thereof, except for the monomer (m2).

Europäisches Patentamt
European Patent Office
Office européen des brevets

# EUROPEAN SEARCH REPORT

Application Number
EP 10 15 6065

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | WO 2009/054106 A1 (NITTO DENKO CORP [JP]; YAMANAKA EIJI [JP]; NAGASAKI KUNIO [JP]; HIRAO) 30 April 2009 (2009-04-30)<br>* paragraph [0195] - paragraph [0199]; examples 3 - 7 *<br>* paragraph [0200] - paragraph [0201] *<br>* paragraph [0210] - paragraph [0214]; examples 6 - 10 *<br>* claims 1, 7, 8, 9, 13 *<br>----- | 1-5 | INV.<br>C09J7/02 |
| Y | WO 2007/111138 A1 (NITTO DENKO CORP [JP]; INOUE SHINICHI [JP]; SATAKE MASAYUKI [JP]; YANO) 4 October 2007 (2007-10-04)<br>* paragraph [0019] - paragraph [0022] *<br>* paragraph [0024] - paragraph [0026] *<br>* paragraph [0028] *<br>* claims 1, 2, 3, 5 *<br>----- | 1-5 | |
| Y | EP 0 913 443 A1 (TOAGOSEI CO LTD [JP]) 6 May 1999 (1999-05-06)<br>* paragraph [0007] *<br>* paragraph [0069]; example A2 *<br>* paragraph [0078]; example 2; table 4 *<br>* paragraph [0084] - paragraph [0086]; example 6 *<br>* claims 1, 3, 4 *<br>----- | 1-5 | TECHNICAL FIELDS SEARCHED (IPC)<br>C09J |
| Y | JP 2005 179561 A (NITTO DENKO CORP) 7 July 2005 (2005-07-07)<br>* paragraph [0007] *<br>* paragraph [0096] - paragraph [0099]; examples 3, 4 *<br>* claims 4, 8, 10 *<br>----- | 1-5 | |

The present search report has been drawn up for all claims

| Place of search | Date of completion of the search | Examiner |
|---|---|---|
| Munich | 23 June 2010 | Siemsen, Beatrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 10 15 6065

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2010

| Patent document cited in search report | Publication date | Patent family member(s) | Publication date |
|---|---|---|---|
| WO 2009054106 A1 | 30-04-2009 | NONE | |
| WO 2007111138 A1 | 04-10-2007 | CN 101395506 A | 25-03-2009 |
| | | JP 2007264092 A | 11-10-2007 |
| | | KR 20080088655 A | 02-10-2008 |
| | | US 2009104445 A1 | 23-04-2009 |
| EP 0913443 A1 | 06-05-1999 | WO 9803602 A1 | 29-01-1998 |
| | | US 6368707 B1 | 09-04-2002 |
| JP 2005179561 A | 07-07-2005 | JP 4145783 B2 | 03-09-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005200513 A
- US 4364972 A
- JP 58500130 T
- JP 2000096012 A
- JP 2009058703 A